# EUROPEAN PATENT APPLICATION

(11) **EP 3 048 748 A1**
(43) Date of publication of application: **27.07.2016**
(21) Application number: 14845727.8
(22) Date of filing: 17.09.2014
(51) Int. Cl.: H04L 1/00

(54) **MOBILE TERMINAL COMMUNICATION METHOD, DEVICE AND RELATED EQUIPMENT**

(30) Priority: 18.09.2013 CN 201310478617
(71) Applicant: China Mobile Communications Corporation, Beijing 100032 (CN)
(72) Inventor: LIU, Yunlu, Beijing 100032 (CN); YANG, Ning, Beijing 100032 (CN); JIANG, Xiaowei, Beijing 100032 (CN); GAO, Youjun, Beijing 100032 (CN)
(74) Representative: Santi, Filippo
(86) International application number: PCT/CN2014/086681
(87) International publication number: WO 2015/039597

(57) **Abstract**

The present disclosure provides mobile terminal communication control methods, devices and related equipment. An MBS receives from a mobile terminal a RLF message indicative of a RLF occurring at the mobile terminal for an SBS, and transmits to the mobile terminal a first deactivation instruction message for instructing the mobile terminal to be deactivated for the SBS. According to the present disclosure, it is able to effectively control the communication of the mobile terminal in a dual-connection mode when the RLF occurs at the mobile terminal for the SBS.

## Description

### CROSS-REFERENCE TO RELATED APPLICATION

The present application claims a priority of the Chinese Patent Application No.201310478617.X filed on September 18, 2013 and entitled "mobile terminal communication control methods, devices and related equipment", which is incorporated herein by reference in its entirety.

### TECHNICAL FIELD

The present disclosure relates to the field of communication technology, in particular to mobile terminal communication control methods, devices and related equipment.

### BACKGROUND

Currently, a counting result for a cellular network shows that, for a service provider, a majority of voice services and data services, about 60% and 70% respectively, occur indoor. In addition, it is predicted that the data services may increase rapidly, by about 1000 times in the next 10 years, and among them, the indoor data services may account for 90% of the total services. Hence, it is impossible for a coverage mode of the traditional cellular network to meet the increasing demand on the indoor and hotspot wireless data services. For example, the traditional 2^{nd}-generation (2G) and 3^{rd}-generation (3G) network capacity for wireless data access is now close to its limit, and it is increasingly hard to acquire sites and antenna-feeder resources. In addition, a distance between adjacent base stations (BSs) (or evolved Nodes B (eNBs)) in a dense urban area is close to its theoretical limit, and it is very difficult to support the dense deployment of the traditional cellular macro base stations. Further, the deployment and operation of the macro base stations are very expensive, and it is difficult to continue to add new macro base stations to expand the network capacity.

Recently, with respect the hotspot and indoor data services, a so-called small cell technology has been developed. In the industry, cells covered by Pico base stations and Femto base stations defined in the 3GPP standard are collectively called as small cells. A base station for the small cell may be called as a slave base station (SBS), and correspondingly, a base station for a macro cell may be called as a master base station (MBS). The small cells may support interference management and node auto-start, and they may share a core network and a network management system with the cellular network, so the deployment and management of the small cells are relatively simple. Hence, the small cell technology has become a mainstream technology to expand the coverage and capacity for the indoor and hotspot data services in future.

In addition, upon the introduction of the small cell technology, it is able to enable a mobile terminal to access both the MBS and the SBS simultaneously, i.e., a dual-connection mode may be adopted by the mobile terminal. In this way, it is able for the mobile terminal to execute the communication through both the MBS and the SBS, thereby to improve the network throughput and the communication quality.

However, when a Radio Link Failure (RLF) occurs, at the MBS or SBS, for the mobile terminal in the dual-connection mode, there is no communication control scheme in the related art to ensure the effective communication of the mobile terminal.

### SUMMARY

An object of the present disclosure is to provide mobile terminal communication control methods, devices and related equipment, so as to effectively control the communication of the mobile terminal in a dual-connection mode when a RLF occurs at the mobile terminal for an SBS or MBS.

In one aspect, the present disclosure provides in some embodiments a mobile terminal communication control method, including steps of: receiving, by an MBS, from a mobile terminal a RLF message indicative of a RLF occurring at the mobile terminal for an SBS; and transmitting, by the MBS, to the mobile terminal a first deactivation instruction message for instructing the mobile terminal to be deactivated for the SBS.

Alternatively, subsequent to the step of receiving, by the MBS, from the mobile terminal the RLF message indicative of the RLF occurring at the mobile terminal for the SBS, the method further includes transmitting to the SBS a second deactivation instruction message for instructing the SBS to be deactivated for the mobile terminal.

In another aspect, the present disclosure provides in some embodiments a mobile terminal communication control method, including steps of: when a RLF occurs at a mobile terminal which accesses an MBS and an SBS simultaneously for the SBS, transmitting to the MBS a RLF message indicative of the RLF occurring at the mobile terminal for the SBS; receiving a first deactivation instruction message from the MBS; and executing deactivation for the SBS.

In yet another aspect, the present disclosure provides in some embodiments a mobile terminal communication control device for use in an MBS, including: a reception unit configured to receive from a mobile terminal a RLF message indicative of a RLF occurring at the mobile terminal for an SBS; and a transmission unit configured to transmit to the mobile terminal a first deactivation instruction message for instructing the mobile terminal to be deactivated for the SBS.

Alternatively, the transmission unit is further configured to, after the reception unit has received from the mobile terminal the RLF message indicative of the RLF occurring at the mobile terminal for the SBS, transmit to the SBS a second deactivation instruction message for instructing the SBS to be deactivated for the mobile terminal.

In still yet another aspect, the present disclosure provides in some embodiments a mobile terminal accessing an MBS and an SBS simultaneously, including: a transmission unit configured to, when a RLF occurs at the mobile terminal for the SBS, transmit to the MBS a RLF message indicative of a RLF occurring at the mobile terminal for the SBS; a reception unit configured to receive a first deactivation instruction message from the MBS; and a deactivation unit configured to execute deactivation for the SBS.

According to the embodiments of the present disclosure, when the RLF occurs at the mobile terminal for the SBS, the mobile terminal may transmit the RLF message to the MBS, so as to notify the MBS of the RLF occurring at the mobile terminal for the SBS. After the MBS has received the RLF message from the mobile terminal, it may transmit the first deactivation instruction message to the mobile terminal, so as to instruct the mobile terminal to be deactivated for the SBS, thereby to enable the mobile terminal to execute the effective communication merely through the MBS after the mobile terminal has been deactivated for the SBS. As a result, it is able to prevent the occurrence of a communication failure when the mobile terminal continues to execute the communication through the SBS.

In still yet another aspect, the present disclosure provides in some embodiments a mobile terminal communication control method, including steps of: receiving, by an MBS, from a mobile terminal a RLF message indicative of a RLF occurring at the mobile terminal for an SBS; transmitting to the SBS a RLF indication message indicative of the RLF occurring at the mobile terminal for the SBS; receiving radio configuration information and random access resource information for the mobile terminal returned after the SBS has received the RLF indication message; and transmitting to the mobile terminal a re-access instruction message carrying the radio configuration information and the random access resource information, the re-access instruction message being used to instruct the mobile terminal to re-access the SBS in accordance with the radio configuration information and the random access resource information.

Alternatively, subsequent to the step of transmitting to the mobile terminal the re-access instruction message, the method further includes: receiving from the mobile terminal a first re-access success message indicating that the mobile terminal has re-accessed the SBS successfully; and/or receiving from the SBS a second re-access success message indicating that the mobile terminal has re-accessed the SBS successfully.

Alternatively, subsequent to the step of transmitting to the mobile terminal the re-access instruction message, the method further includes: receiving from the mobile terminal a re-access failure message indicating that the mobile terminal fails to re-access the SBS; and transmitting to the mobile terminal a first deactivation instruction message for instructing the mobile terminal to be deactivated for the SBS.

Alternatively, subsequent to the step of receiving the re-access failure message from the mobile terminal, the method further includes transmitting to the SBS a second deactivation instruction message for instructing the SBS to be deactivated for the mobile terminal.

In still yet another aspect, the present disclosure further provides in some embodiments a mobile terminal communication control method, including steps of: receiving, by an SBS, from an MBS a RLF indication message indicative of a RLF occurring at a mobile terminal for the SBS; re-configuring a radio protocol layer for the mobile terminal; and transmitting to the MBS radio configuration information and random access resource information for the mobile terminal, so as to enable the mobile terminal to re-access the SBS.

Alternatively, the method further includes, when the mobile terminal has re-accessed the SBS successfully, transmitting to the MBS a second re-access success message indicating that the mobile terminal has re-accessed the SBS successfully.

Alternatively, the method further includes receiving from the MBS a second deactivation instruction message which is transmitted by the MBS after it has received from the mobile terminal a re-access failure message indicating that the mobile terminal fails to re-access the SBS, and executing deactivation for the mobile terminal.

In still yet another aspect, the present disclosure provides in some embodiments a mobile terminal communication control method, including steps of: when a RLF occurs at a mobile terminal which accesses an MBS and an SBS simultaneously for the SBS, transmitting to the MBS a RLF message indicative of a RLF occurring at the mobile terminal for the SBS; receiving from the MBS a re-access instruction message carrying radio configuration information and random access resource information which are received from the SBS after the MBS has transmitted to the SBS the RLF indication message indicative of the RLF occurring at the mobile terminal for the SBS; and re-accessing the SBS in accordance with the radio configuration information and the random access resource information.

Alternatively, the method further includes: when the mobile terminal has re-accessed the SBS successfully, transmitting to the MBS a first re-access success message indicating that the mobile terminal has re-accessed the SBS successfully; and when the mobile terminal fails to re-access the SBS, transmitting to the MBS a re-access failure message indicating that the mobile terminal fails to re-access the SBS.

Alternatively, subsequent to the step of transmitting to the MBS the re-access failure message, the method further includes: receiving from the MBS a first deactivation instruction message; and executing deactivation for the SBS.

In still yet another aspect, the present disclosure provides in some embodiments a mobile terminal communication control device for use in an MBS, including: a first reception unit configured to receive from a mobile terminal a RLF message indicative of a RLF occurring at the mobile terminal for an SBS; a first transmission unit configured to transmit to the SBS a RLF indication message indicative of the RLF occurring at the mobile terminal for the SBS; a second reception unit configured to receive radio configuration information and random access resource information for the mobile terminal returned after the SBS has received the RLF indication message; and a second transmission unit configured to transmit to the mobile terminal a re-access instruction message carrying the radio configuration information and the random access resource information, the re-access instruction message being used to instruct the mobile terminal to re-access the SBS in accordance with the radio configuration information and the random access resource information.

Alternatively, the first reception unit is further configured to, after the second transmission unit has transmitted to the mobile terminal the re-access instruction message, receive from the mobile terminal a first re-access success message indicating that the mobile terminal has re-accessed the SBS successfully; and/or the second reception unit is further configured to, after the second transmission unit has transmitted to the mobile terminal the re-access instruction message, receive from the SBS a second re-access success message indicating that the mobile terminal has re-accessed the SBS.

Alternatively, the first reception unit is further configured to, after the second transmission unit has transmitted to the mobile terminal the re-access instruction message, receive from the mobile terminal a re-access failure message indicating that the mobile terminal fails to re-access the SBS, and the second transmission unit is further configured to transmit to the mobile terminal a first deactivation instruction message for instructing the mobile terminal to be deactivated for the SBS.

Alternatively, the first transmission unit is further configured to, after the first reception unit has received the re-access failure message from the mobile terminal, transmit to the SBS a second deactivation instruction message for instructing the SBS to be deactivated for the mobile terminal.

In still yet another aspect, the present disclosure further provides in some embodiments a mobile terminal communication control device for use in an SBS, including: a reception unit configured to receive from an MBS a RLF message indicative of a RLF occurring at a mobile terminal for the SBS; a configuration unit configured to re-configure a radio protocol layer for the mobile terminal; and a transmission unit configured to transmit to the MBS radio configuration information and random access resource information for the mobile terminal, so as to enable the mobile terminal to re-access the SBS.

Alternatively, the transmission unit is further configured to, when the mobile terminal has re-accessed the SBS successfully, transmit to the MBS a second re-access success message indicating that the mobile terminal has re-accessed the SBS successfully.

Alternatively, the reception unit is further configured to receive from the MBS a second deactivation instruction message which is transmitted after the MBS has received from the mobile terminal a re-access failure message indicating that the mobile terminal fails to re-access the SBS. The mobile terminal communication control device further includes a deactivation unit configured to execute deactivation for the mobile terminal.

In still yet another aspect, the present disclosure provides in some embodiments a mobile terminal accessing an MBS and an SBS simultaneously, including: a transmission unit configured to, when a RLF occurs at the mobile terminal for an SBS, transmit to an MBS a RLF message indicative of the RLF occurs at the mobile terminal for the SBS; a reception unit configured to receive from the MBS a re-access instruction message carrying radio configuration information and random access resource information which are received after the MBS has transmitted to the SBS a RLF indication message indicative of a RLF occurring at the mobile terminal for the SBS; and an access unit configured to re-access the SBS in accordance with the radio configuration information and the random access resource information.

Alternatively, the transmission unit is configured to, when the mobile terminal has re-accessed the SBS successfully, transmit to the MBS a first re-access success message indicating that the mobile terminal has re-accessed the SBS successfully, and when the mobile terminal fails to re-access the SBS, transmit to the MBS a re-access failure message indicating that the mobile terminal fails to re-access the SBS.

Alternatively, the reception unit is further configured to, after the transmission unit has transmitted to the MBS the re-access failure message, receive from the MBS a first deactivation instruction message. The mobile terminal further includes a deactivation unit configured to execute deactivation for the SBS.

According to the embodiments of the present disclosure, when the RLF occurs at the mobile terminal for the SBS, the mobile terminal may be controlled to re-access the SBS at first, so as to enable the mobile terminal to be maintained in a dual-connection mode again, thereby to continuously ensure the communication quality for the mobile terminal.

In addition, when the mobile terminal fails to re-access the SBS, the MBS may transmit the first deactivation instruction message to the mobile terminal, so as to instruct the mobile terminal to be deactivated for the SBS. As a result, after the mobile terminal has been deactivated for the SBS, it is able for the mobile terminal to execute the effective communication merely through the MBS, thereby to prevent the occurrence of a communication failure when the mobile terminal continues to execute the communication through the SBS.

In still yet another aspect, the present disclosure provides in some embodiments a mobile terminal communication control method, including steps of: receiving, by an SBS, from a mobile terminal a RLF message indicative of a RLF occurring at the mobile terminal for an MBS; transmitting to the MBS a RLF indication message indicative of the RLF occurring at the mobile terminal for the MBS; determining, through information interaction between the SBS and the MBS, that communication of the mobile terminal is to be switched from the MBS to the SBS; and transmitting to the mobile terminal a switch command message for instructing the mobile terminal to switch its communication from the MBS to the SBS.

Alternatively, the step of determining, through the information interaction between the SBS and the MBS, that the communication of the mobile terminal is to be switched from the MBS to the SBS includes: receiving from the MBS a switch request message for requesting the switch of the communication of the mobile terminal from the MBS to the SBS; and transmitting to the MBS a switch acknowledgement message for indicating that the communication of the mobile terminal is to be switched from the MBS to the SBS.

Alternatively, subsequent to the step of determining that the communication of the mobile terminal is to be switched from the MBS to the SBS, the method further includes: receiving from the MBS, service data to be transmitted to the mobile terminal; and transmitting to the mobile terminal the service data.

In still yet another aspect, the present disclosure provides in some embodiments a mobile terminal communication control method, including steps of: receiving, by an MBS, from an SBS a RLF indication message indicative of a RLF occurring at a mobile terminal for the MBS; determining, through information interaction between the MBS and the SBS, that communication of the mobile terminal is to be switched from the MBS to the SBS; and transmitting to a mobile management entity at a core-network side a path switch message for requesting the switch of a path for the mobile terminal from the mobile management entity to the MBS into a path from the mobile management entity to the SBS.

Alternatively, the step of determining, through the information interaction between the MBS and the SBS, that the communication of the mobile terminal is to be switched from the MBS to the SBS includes: transmitting to the SBS a switch request message for requesting the switch of the communication of the mobile terminal from the MBS to the SBS; receiving from the SBS a switch acknowledgement message; and determining, in accordance with the switch acknowledgement message, that the communication of the mobile terminal is to be switched from the MBS to the SBS.

Alternatively, subsequent to the step of determining that the communication of the mobile terminal is to be switched from the MBS to the SBS, the method further includes transmitting to the SBS service data to be transmitted to the mobile terminal, so that the SBS transmits the service data to the mobile terminal.

In still yet another aspect, the present disclosure provides in some embodiments a mobile terminal communication control method, including steps of: when a RLF occurs at a mobile terminal which accesses an MBS and an SBS simultaneously for the MBS, transmitting to the SBS a RLF message indicative of the RLF occurring at the mobile terminal for the MBS; receiving from the SBS a switch command message for instructing the mobile terminal to switch its communication from the MBS to the SBS; and switching the communication of the mobile terminal from the MBS to the SBS.

Alternatively, the step of switching the communication of the mobile terminal from the MBS to the SBS includes: deleting control plane information configured at the MBS; switching data communication from the MBS to the SBS; and configuring control plane information at the SBS.

In still yet another aspect, the present disclosure provides in some embodiments a mobile terminal communication control device for use in an SBS, including: a first reception unit configured to receive from a mobile terminal a RLF message indicative of a RLF occurring at the mobile terminal for an MBS; a first transmission unit configured to transmit to the MBS a RLF indication message indicative of the RLF occurring at the mobile terminal for the MBS; a determination unit configured to determine, through information interaction between the SBS and the MBS, that communication of the mobile terminal is to be switched from the MBS to the SBS; and a second transmission unit configured to transmit to the mobile terminal a switch command message for instruct the mobile terminal to switch its communication from the MBS to the SBS.

Alternatively, the mobile terminal communication control device further includes a second reception unit configured to receive from the MBS a switch request message for requesting the switch of the communication of the mobile terminal from the MBS to the SBS, the first transmission unit is further configured to transmit to the MBS a switch acknowledgement message, and the determination unit is configured to, after the first transmission unit has transmitted to the MBS the switch acknowledgement message, determine that the communication of the mobile terminal is to be switched from the MBS to the SBS.

Alternatively, the mobile terminal communication control device further includes a second reception unit configured to, after the determination unit determines that the communication of the mobile terminal is to be switched from the MBS to the SBS, receive from the MBS, service data to be transmitted to the mobile terminal, and the second transmission unit is further configured to transmit to the mobile terminal the service data.

In still yet another aspect, the present disclosure provides in some embodiments a mobile terminal communication control device for use in an MBS, including: a reception unit configured to receive from an SBS a RLF indication message indicative of a RLF occurring at a mobile terminal for the MBS; a determination unit configured to determine, through information interaction between the MBS and the SBS, that communication of the mobile terminal is to be switched from the MBS to the SBS; and a first transmission unit configured to transmit to a mobile management entity at a core-network side a path switch message for requesting the switch of a path for the mobile terminal from the mobile management entity to the MBS into a path from the mobile management entity to the SBS.

Alternatively, the mobile terminal communication control device further includes a second transmission unit configured to transmit to the SBS a switch request message for requesting the switch of the communication of the mobile terminal from the MBS to the SBS, the reception unit is further configured to receive from the SBS a switch acknowledgement message, and the determination unit is configured to determine, in accordance with the switch acknowledgement message, that the communication of the mobile terminal is to be switched from the MBS to the SBS.

Alternatively, the mobile terminal communication control device further includes a second transmission unit configured to, after the determination unit determines that the communication of the mobile terminal is to be switched from the MBS to the SBS, transmit to the SBS service data to be transmitted to the mobile terminal, so that the SBS transmits the service data to the mobile terminal.

In still yet another aspect, the present disclosure provides in some embodiments a mobile terminal accessing an MBS and an SBS simultaneously, including: a transmission unit configured to, when a RLF occurs at the mobile terminal for the MBS, transmit to the SBS a RLF message indicative of the RLF occurring at the mobile terminal for the MBS; a reception unit configured to receive from the SBS a switch command message for instructing the mobile terminal to switch its communication from the MBS to the SBS; and a switching unit configured to switch the communication of the mobile terminal from the MBS to the SBS.

Alternatively, the switching unit is configured to delete control plane information configured at the MBS, switch data communication from the MBS to the SBS, and configure control plane information at the SBS.

According to the embodiments of the present disclosure, when the RLF occurs at the mobile terminal for the MBS, the mobile terminal may transmit the RLF message to the SBS so as to notify the SBS of the RLF occurring at the mobile terminal for the MBS. After the SBS has received the RLF message from the mobile terminal, the communication of the mobile terminal is switched from the MBS to the SBS through the information interaction between the SBS and the MBS. As a result, after the switch, it is able for the mobile terminal to execute the effective communication merely through the SBS, thereby to prevent the occurrence of a communication failure when the mobile terminal continues to execute the communication through the MBS.

In still yet another aspect, the present disclosure provides in some embodiments a mobile terminal communication control method, including steps of: receiving, by an SBS, from a mobile terminal a RLF message indicative of a RLF occurring at the mobile terminal for an MBS; transmitting to the MBS a RLF indication message indicative of the RLF occurring at the mobile terminal for the MBS; receiving from the MBS radio configuration information and random access resource information for the mobile terminal returned after the MBS has received the RLF indication message; and transmitting to the mobile terminal a re-access instruction message carrying the radio configuration information and the random access resource information, the re-access instruction message being used to instruct the mobile terminal to re-access the MBS in accordance with the radio configuration information and the random access resource information.

Alternatively, subsequent to the step of transmitting to the mobile terminal the re-access instruction message, the method further includes: receiving from the mobile terminal a first re-access success message indicating that the mobile terminal has accessed the MBS successfully; and/or receiving from the MBS a second re-access success message indicating that the mobile terminal has accessed the MBS successfully.

Alternatively, subsequent to the step of transmitting to the mobile terminal the re-access instruction message, the method further includes: receiving from the mobile terminal a first re-access failure message indicating that the mobile terminal fails to re-access the MBS; transmitting to the MBS a second re-access failure message indicating that the mobile terminal fails to re-access the MBS; determining, through information interaction between the SBS and the MBS, that communication of the mobile terminal is to be switched from the MBS to the SBS; and transmitting to the mobile terminal a switch command message for instructing the mobile terminal to switch its communication from the MBS to the SBS.

Alternatively, the step of determining, through the information interaction between the SBS and the MBS, that the communication of the mobile terminal is to be switched from the MBS to the SBS includes: receiving from the MBS a switch request message for requesting the switch of the communication of the mobile terminal from the MBS to the SBS; and transmitting to the MBS a switch acknowledgement message for indicating that the communication of the mobile terminal is to be switched from the MBS to the SBS.

Alternatively, subsequent to the step of determining that the communication of the mobile terminal is to be switched from the MBS to the SBS, the method further includes: receiving from the MBS service data to be transmitted to the mobile terminal; and transmitting to the mobile terminal the service data.

In still yet another aspect, the present disclosure provides in some embodiments a mobile terminal communication control method, including steps of: receiving, by an MBS, from an SBS a RLF indication message indicative of a RLF occurring at a mobile terminal for the MBS; re-configuring a radio protocol layer for the mobile terminal; and transmitting to the SBS radio configuration information and random access resource information for the mobile terminal, so that the mobile terminal re-accesses the MBS.

Alternatively, the method further includes, when the mobile terminal has re-accessed the MBS successfully, transmitting to the SBS a second re-access success message indicating that the mobile terminal has re-accessed the MBS successfully.

Alternatively, the method further includes: receiving from the SBS a second re-access failure message indicating that the mobile terminal fails to re-access the MBS; determining, in accordance with the second re-access failure message, that the mobile terminal fails to re-access the MBS; determining, through information interaction between the MBS and the SBS, that communication of the mobile terminal is to be switched from the MBS to the SBS; and transmitting to a mobile management entity at a core-network side a path switch message for requesting the switch of a path for the mobile terminal from the mobile management entity to the MBS into a path from the mobile management entity to the SBS.

Alternatively, the step of determining, through the information interaction between the MBS and the SBS, that the communication of the mobile terminal is to be switched from the MBS to the SBS includes: transmitting to the SBS a switch request message for requesting the switch of the communication of the mobile terminal from the MBS to the SBS; receiving from the SBS a switch acknowledgement message; and determining, in accordance with the switch acknowledgement message, that the communication of the mobile terminal is to be switched from the MBS to the SBS.

Alternatively, subsequent to the step of determining that the communication of the mobile terminal is to be switched from the MBS to the SBS, the method further includes transmitting to the SBS service data to be transmitted to the mobile terminal, so that the service data is forwarded to the mobile terminal through the SBS.

In still yet another aspect, the present disclosure provides in some embodiments a mobile terminal communication control method, including steps of: when a RLF occurs at a mobile terminal which accesses an MBS and an SBS simultaneously for the MBS, transmitting to the SBS a RLF message indicative of the RLF occurring at the mobile terminal for the MBS; receiving from the SBS a re-access instruction message carrying radio configuration information and random access resource information which are received from the MBS after the SBS has transmitted to the MBS a RLF indication message indicative of the RLF occurring at the mobile terminal for the MBS; and re-accessing the MBS in accordance with the radio configuration information and the random access resource information.

Alternatively, the method further includes: when the mobile terminal has re-accessed the MBS successfully, transmitting to the SBS a first re-access success message indicating that the mobile has re-accessed the MBS successfully; and when the mobile terminal fails to re-access the MBS, transmitting to the SBS a first re-access failure message indicating that the mobile terminal fails to re-access the MBS.

Alternatively, subsequent to the step of transmitting to the SBS the first re-access failure message, the method further includes: receiving from the SBS a switch command message for instructing the mobile terminal to switch its communication from the MBS to the SBS; and switching the communication of the mobile terminal from the MBS to the SBS.

Alternatively, the step of switching the communication of the mobile terminal from the MBS to the SBS includes: deleting control plane information configured at the MBS; switching data communication from the MBS to the SBS; and configuring control plane information at the SBS.

In still yet another aspect, the present disclosure provides in some embodiments a mobile terminal communication control device for use in an SBS, including: a first reception unit configured to receive from a mobile terminal a RLF message indicative of a RLF occurring at the mobile terminal for an MBS; a first transmission unit configured to transmit to the MBS a RLF indication message indicative of the RLF occurring at the mobile terminal for the MBS; a second reception unit configured to receive from the MBS radio configuration information and random access resource information for the mobile terminal returned after the MBS has received the RLF indication message; and a second transmission unit configured to transmit to the mobile terminal a re-access instruction message carrying the radio configuration information and the random access resource information, the re-access instruction message being used to instruct the mobile terminal to re-access the MBS in accordance with the radio configuration information and the random access resource information.

Alternatively, the first reception unit is further configured to, after the second transmission unit has transmitted to the mobile terminal the re-access instruction message, receive from the mobile terminal a first re-access success message indicating that the mobile terminal has accessed the MBS successfully; and/or the second reception unit is further configured to, after the second transmission unit has transmitted to the mobile terminal the re-access instruction message, receive from the MBS a second re-access success message indicating that the mobile terminal has accessed the MBS successfully.

Alternatively, the first reception unit is further configured to, after the second transmission unit has transmitted to the mobile terminal the re-access instruction message, receive from the mobile terminal a first re-access failure message indicating that the mobile terminal fails to re-access the MBS, and the first transmission unit is further configured to transmit to the MBS a second re-access failure message indicating that the mobile terminal fails to re-access the MBS.

Alternatively, the mobile terminal communication control device further includes a determination unit configured to determine, through information interaction between the SBS and the MBS, that communication of the mobile terminal is to be switched from the MBS to the SBS, and the second transmission unit is further configured to transmit to the mobile terminal a switch command message for instructing the mobile terminal to switch its communication from the MBS to the SBS.

Alternatively, the second reception unit is further configured to receive from the MBS a switch request message for requesting the switch of the communication of the mobile terminal from the MBS to the SBS, the first transmission unit is further configured to transmit to the MBS a switch acknowledgement message, and the determination unit is configured to, after the first transmission unit has transmitted to the MBS the switch acknowledgement message, determine that the communication of the mobile terminal is to be switched from the MBS to the SBS.

Alternatively, the second reception unit is further configured to, after the determination unit determines that the communication of the mobile terminal is to be switched from the MBS to the SBS, receive from the MBS service data to be transmitted to the mobile terminal, and the second transmission unit is further configured to transmit to the mobile terminal the service data.

In still yet another aspect, the present disclosure provides in some embodiments a mobile terminal communication control device for use in an MBS, including: a reception unit configured to receive from an SBS a RLF indication message indicative of a RLF occurring at a mobile terminal for the MBS; a configuration unit configured to re-configure a radio protocol layer for the mobile terminal; and a first transmission unit configured to transmit to the SBS radio configuration information and random access resource information for the mobile terminal, so that the mobile terminal re-accesses the MBS.

Alternatively, the first transmission unit is further configured to, when the mobile terminal has re-accessed the MBS successfully, transmit to the SBS a second re-access success message indicating that the mobile terminal has re-accessed the MBS successfully.

Alternatively, the reception unit is further configured to receive from the SBS a second re-access failure message indicating that the mobile terminal fails to re-access the MBS.

Alternatively, the mobile terminal communication control device further includes: a first determination unit configured to determine, in accordance with the second re-access failure message, that the mobile terminal fails to re-access the MBS; a second determination unit configured to determine, through information interaction between the MBS and the SBS, that communication of the mobile terminal is to be switched from the MBS to the SBS; and a second transmission unit configured to transmit to a mobile management entity at a core-network side a path switch message for requesting the switch of a path for the mobile terminal from the mobile management entity to the MBS into a path from the mobile management entity to the SBS.

Alternatively, the first transmission unit is further configured to transmit to the SBS a switch request message for requesting the switch of the communication of the mobile terminal from the MBS to the SBS, the reception unit is further configured to receive from the SBS a switch acknowledgement message, and the second determination unit is configured to determine, in accordance with the switch acknowledgement message, that the communication of the mobile terminal is to be switched from the MBS to the SBS.

Alternatively, the first transmission unit is further configured to, after the second determination unit determines that the communication of the mobile terminal is to be switched from the MBS to the SBS, transmit to the SBS service data to be transmitted to the mobile terminal, so that the service data is forwarded to the mobile terminal through the SBS.

In still yet another aspect, the present disclosure provides in some embodiments a mobile terminal accessing an MBS and an SBS simultaneously, including: a transmission unit configured to, when a RLF occurs at the mobile terminal for the MBS, transmit to the SBS a RLF message indicative of the RLF occurring at the mobile terminal for the MBS; a reception unit configured to receive from the SBS a re-access instruction message carrying radio configuration information and random access resource information which are received from the MBS after the SBS has transmitted to the MBS a RLF indication message indicative of the RLF occurring at the mobile terminal for the MBS; and an access unit configured to re-access the MBS in accordance with the radio configuration information and the random access resource information.

Alternatively, the transmission unit is further configured to, when the mobile terminal has re-accessed the MBS successfully, transmit to the SBS a first re-access success message indicating that the mobile has re-accessed the MBS successfully, and when the mobile terminal fails to re-access the MBS, transmit to the SBS a first re-access failure message indicating that the mobile terminal fails to re-access the MBS.

Alternatively, the reception unit is further configured to, after the transmission unit has transmitted to the SBS the first re-access failure message, receive from the SBS a switch command message for instructing the mobile terminal to switch its communication from the MBS to the SBS, and the mobile terminal further includes a switching unit configured to switch the communication of the mobile terminal from the MBS to the SBS.

Alternatively, the switching unit is configured to delete control plane information configured at the MBS, switch data communication from the MBS to the SBS, and configure control plane information at the SBS.

According to the embodiments of the present disclosure, when the RLF occurs at the mobile terminal for the MBS, the mobile terminal may be controlled to re-access the MBS at first, so as to enable the mobile terminal to be in a dual-connection mode again, thereby to continuously ensure the communication quality of the mobile terminal.

In addition, when the mobile terminal fails to re-access the MBS, through the information interaction between the SBS and the MBS, it is able for the SBS to control the mobile terminal to switch its communication from the MBS to the SBS. As a result, after the switch, it is able for the mobile terminal to execute effective communication merely through the SBS, thereby to prevent the occurrence of a communication failure when the mobile terminal continues to execute the communication through the MBS.

The other features and advantages of the present disclosure will be described hereinafter, and parts of them will become more apparent from the following description or by implementing the present disclosure. Objects and the other advantages of the present disclosure may be achieved and acquired from a structure specified in the description, the appended claims and the drawings.

### BRIEF DESCRIPTION OF THE DRAWINGS

The following drawings, as a part of the description, are used in conjunction with the embodiments to illustrate the present disclosure, but shall not be used to limit the scope of the present disclosure. In these drawings,
Fig.1 is a flow chart of a mobile terminal communication control method for use in an MBS according to the first embodiment of the present disclosure;
Fig.2 is a flow chart of a mobile terminal communication control method for use in a mobile terminal according to the first embodiment of the present disclosure;
Fig.3 is a flow chart of the mobile terminal communication control method according to the first embodiment of the present disclosure;
Fig.4 is a schematic view showing a mobile terminal communication control device for use in the MBS according to the first embodiment of the present disclosure;
Fig.5 is a schematic view showing the mobile terminal according to the first embodiment of the present disclosure;
Fig.6 is a flow chart of a mobile terminal communication control method for use in an MBS according to the second embodiment of the present disclosure;
Fig.7 is a flow chart of a mobile terminal communication control method for use in an SBS according to the second embodiment of the present disclosure;
Fig.8 is a flow chart of a mobile terminal communication control method for use in a mobile terminal according to the second embodiment of the present disclosure;
Fig.9 is a flow chart of the mobile terminal communication control method according to the second embodiment of the present disclosure;
Fig.10 is a schematic view showing a mobile terminal communication control device for use in the MBS according to the second embodiment of the present disclosure;
Fig. 11 is a schematic view showing a mobile terminal communication control device for use in the SBS according to the second embodiment of the present disclosure;
Fig.12 is a schematic view showing the mobile terminal according to the second embodiment of the present disclosure;
Fig.13 is a flow chart of a mobile terminal communication control method for use in an SBS according to the third embodiment of the present disclosure;
Fig.14 is a flow chart of a mobile terminal communication control method for use in an MBS according to the third embodiment of the present disclosure;
Fig.15 is a flow chart of a mobile terminal communication control method for use in a mobile terminal according to the third embodiment of the present disclosure;
Fig.16 is a flow chart of the mobile terminal communication control method according to the third embodiment of the present disclosure;
Fig.17 is a schematic view showing a mobile terminal communication control device for use in the SBS according to the third embodiment of the present disclosure;
Fig.18 is a schematic view showing a mobile terminal communication control device for use in the MBS according to the third embodiment of the present disclosure;
Fig.19 is a schematic view showing the mobile terminal according to the third embodiment of the present disclosure;
Fig.20 is a flow chart of a mobile terminal communication control method for use in an SBS according to the fourth embodiment of the present disclosure;
Fig.21 is a flow chart of a mobile terminal communication control method for use in an MBS according to the fourth embodiment of the present disclosure;
Fig.22 is a flow chart of a mobile terminal communication control method for use in a mobile terminal according to the fourth embodiment of the present disclosure;
Fig.23 is a flow chart of the mobile terminal communication control method according to the fourth embodiment of the present disclosure;
Fig.24 is a schematic view showing a mobile terminal communication control device for use in the SBS according to the fourth embodiment of the present disclosure;
Fig.25 is a schematic view showing a mobile terminal communication control device for use in the MBS according to the fourth embodiment of the present disclosure;
Fig.26 is a schematic view showing the mobile terminal according to the fourth embodiment of the present disclosure;
Fig.27 is a flow chart of a mobile terminal communication control method for use in an MBS according to one embodiment of the present disclosure; and
Fig.28 is a flow chart of a mobile terminal communication control method for use in an SBS according to one embodiment of the present disclosure.

### DETAILED DESCRIPTION OF THE EMBODIMENTS

In order to effectively control the communication of a mobile terminal in a dual-connection mode when a RLF occurs at the mobile terminal for an SBS or an MBS, the present disclosure provides mobile terminal communication control methods, devices and related equipment. The present disclosure will be described hereinafter in conjunction with the drawings and embodiments. It should be appreciated that, the following embodiments are for illustrative purposes only, but shall not be used to limit the scope of the present disclosure. The embodiments and features in the embodiments may be combined without any conflict.

### First Embodiment

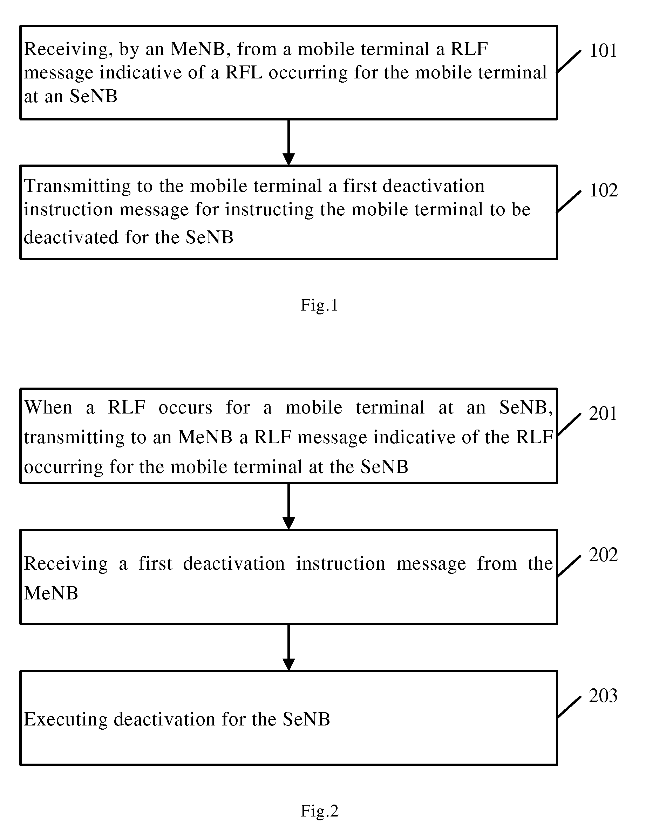

The present disclosure provides in this embodiment a mobile terminal communication control method for use in an MBS. As shown in Fig.1, the method includes Steps 101 and 102.
Step 101: receiving, by an MBS, from a mobile terminal a RLF message indicative of a RLF occurring at the mobile terminal for an SBS.
Step 102: transmitting, by the MBS, to the mobile terminal a first deactivation instruction message for instructing the mobile terminal to be deactivated for the SBS.

Alternatively, subsequent to the step of receiving from the mobile terminal the RLF message, the method further includes transmitting to the SBS a second deactivation instruction message for instructing the SBS to be deactivated for the mobile terminal.

The present disclosure further provides in this embodiment a mobile terminal communication control method for use in a mobile terminal. As shown in Fig.2, the method includes Steps 201 to 203.
Step 201: when a RLF occurs at a mobile terminal which accesses an MBS and an SBS simultaneously for the SBS, transmitting to the MBS a RLF message indicative of the RLF occurring at the mobile terminal for the SBS.
Step 202: receiving a first deactivation instruction message from the MBS.
Step 203: executing deactivation for the SBS.

The mobile terminal communication control method in the first embodiment will be described hereinafter in conjunction with the drawings.

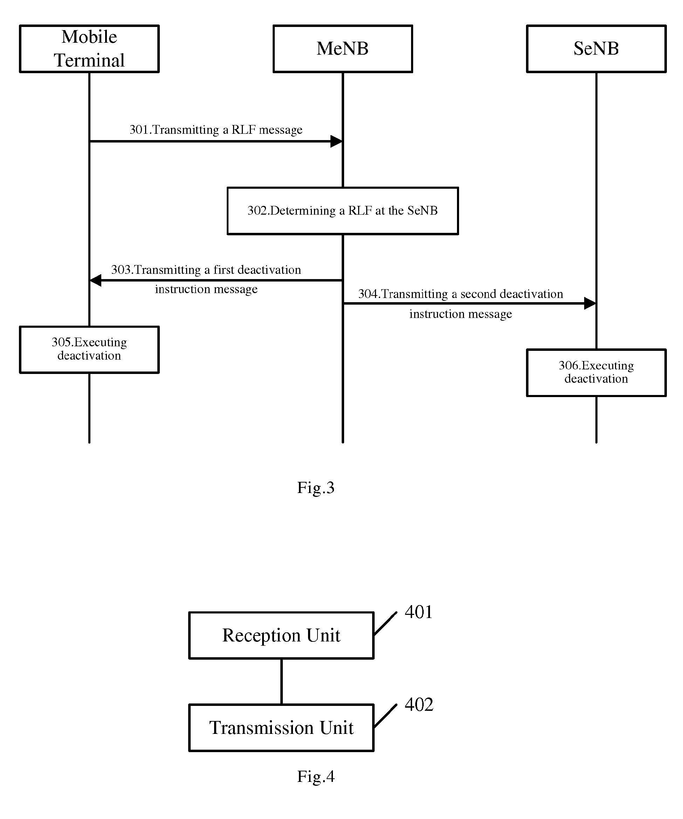

As shown in Fig.3 which is a flow chart of the mobile terminal communication control method according to the first embodiment of the present disclosure, the method includes Steps 301 to 306.
Step 301: at the mobile terminal in a dual-connection mode, i.e., the mobile terminal which accesses the MBS and the SBS simultaneously, when the RLF occurs for the SBS, the RLF message indicative of the RLF occurring at the mobile terminal for the SBS is transmitted to the MBS. When it impossible to acquire, at an MBS side, the SBS that the mobile terminal currently accesses, the RLF message may also carry a base station identifier of the SBS. The RLF message may be a Radio Resource Control (RRC) message.
Step 302: the MBS determines that the RLF occurs at the mobile terminal for the SBS in accordance with the RLF message received from the mobile terminal.
Step 303: the MBS transmits to the mobile terminal the first deactivation instruction message for instructing the mobile terminal to be deactivated for the SBS. The first deactivation instruction message may be a RRC message.
Step 304: the MBS may further transmit to the SBS a second deactivation instruction message for instructing the SBS to be deactivated for the mobile terminal. The second deactivation instruction message may carry a terminal identifier of the mobile terminal.
Step 305: after the mobile terminal has received the first deactivation instruction message, the mobile terminal executes deactivation for the SBS. In this step, various ways known in the related art may be adopted so as to enable the mobile terminal to be deactivated for the SBS, and they will not be particularly defined herein.
Step 306: after the SBS has received the second deactivation instruction message, the SBS executes deactivation for the mobile terminal. In this step, various ways known in the related art may be adopted so as to enable the SBS to be deactivated for the mobile terminal, and they will not be particularly defined herein.

According to the mobile terminal communication control methods in the first embodiment of the present disclosure, when the RLF occurs at the mobile terminal for the SBS, the mobile terminal may transmit the RLF message to the MBS, so as to notify the MBS of the RLF occurring at the mobile terminal for the SBS. After the MBS has received the RLF message from the mobile terminal, it may transmit the first deactivation instruction message to the mobile terminal, so as to instruct the mobile terminal to be deactivated for the SBS, thereby to enable the mobile terminal to execute the effective communication merely through the MBS after the mobile terminal has been deactivated for the SBS. As a result, it is able to prevent the occurrence of a communication failure when the mobile terminal continues to execute the communication through the SBS.

On the basis of the above-mentioned mobile terminal communication control method, the present disclosure further provides in the first embodiment a mobile terminal communication control device for use in the MBS. As shown in Fig.4, the device includes a reception unit 401 and a transmission unit 402. The reception unit 401 is configured to receive from the mobile terminal the RLF message indicative of the RLF occurring at the mobile terminal for the SBS. The transmission unit 402 is configured to transmit to the mobile terminal the first deactivation instruction message for instructing the mobile terminal to be deactivated for the SBS.

Alternatively, the transmission unit 402 is further configured to, after the reception unit 401 has received from the mobile terminal the RLF message, transmit to the SBS the second deactivation instruction message for instructing the SBS to be deactivated for the mobile terminal.

The functions of the above-mentioned units correspond to the steps in Figs.1-3, and thus will not be repeated herein.

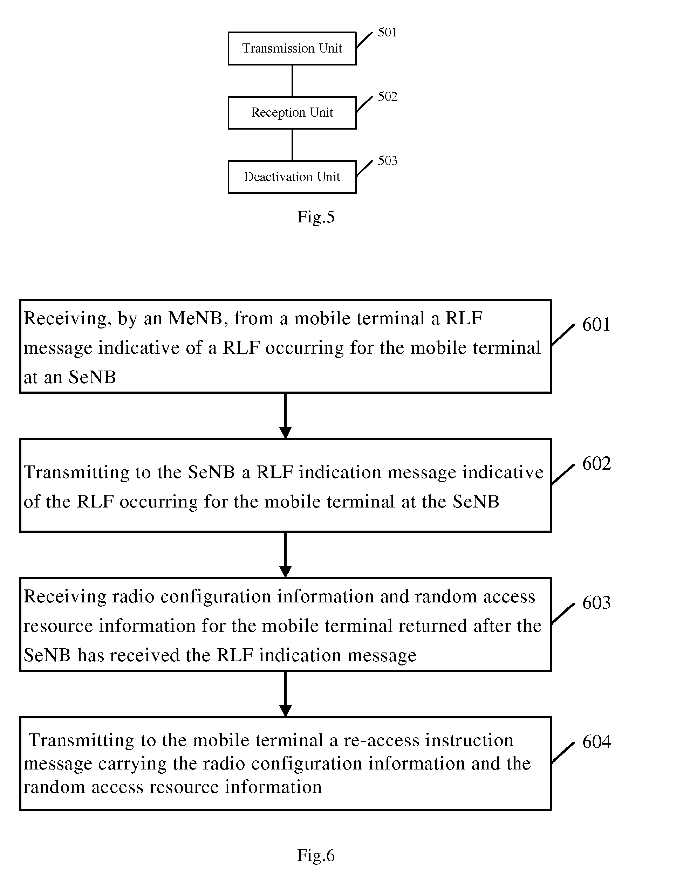

On the basis of the above-mentioned mobile terminal communication control method, the present disclosure further provides in the first embodiment a mobile terminal which accesses the MBS and the SBS simultaneously. As shown in Fig.5, the mobile terminal includes a transmission unit 501, a reception unit 502 and a deactivation unit 503. The transmission unit 501 is configured to, when the RLF occurs at the mobile terminal for the SBS, transmit to the MBS the RLF message indicative of the RLF occurring at the mobile terminal for the SBS. The reception unit 502 is configured receive from the MBS the first deactivation instruction message. The deactivation unit 503 is configured to execute the deactivation for the SBS.

The functions of the above-mentioned units may correspond to the steps in Figs.1-3, and thus will not be repeated herein.

In a word, according to the first embodiment of the present disclosure, the MBS receives from the mobile terminal the RLF message indicative of the RLF occurring at the mobile terminal for the SBS, and transmits to the mobile terminal the first deactivation instruction message for instructing the mobile terminal to be deactivated for the SBS. As a result, when the RLF occurs for the mobile terminal in the dual-connection mode at the SBS, it is able to effectively control the communication of the mobile terminal.

### Second Embodiment

The present disclosure provides in this embodiment a mobile terminal communication control method for use in an MBS. As shown in Fig.6, the method includes Steps 601 to 604.

Step 601: the MBS receives from a mobile terminal a RLF message indicative of a RLF occurring at the mobile terminal for an SBS.

Step 602: a RLF indication message indicative of the RLF occurring at the mobile terminal for the SBS is transmitted to the SBS.

Step 603: the MBS receives radio configuration information and random access resource information for the mobile terminal returned after the SBS has received the RLF indication message.

Step 604: the MBS transmits to the mobile terminal a re-access instruction message carrying the radio configuration information and the random access resource information, the re-access instruction message being used to instruct the mobile terminal to re-access the SBS in accordance with the radio configuration information and the random access resource information.

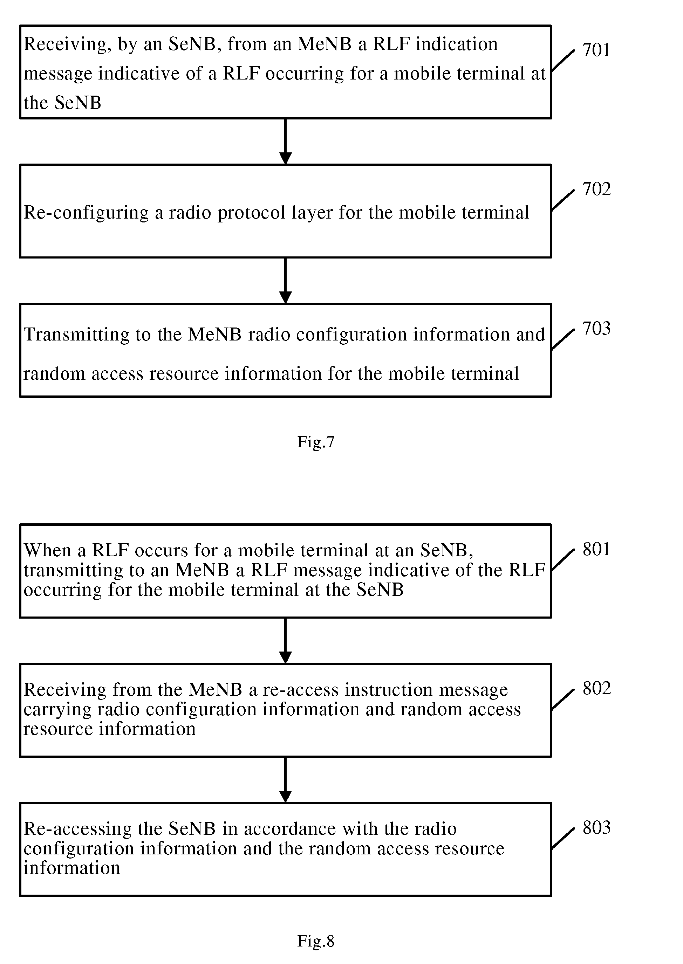

The present disclosure further provides in this embodiment a mobile terminal communication control method for use in the SBS. As shown in Fig.7, the method includes Steps 701 to 703.

Step 701:the SBS receives from the MBS the RLF indication message indicative of the RLF occurring at the mobile terminal for the SBS.

Step 702: the SBS re-configures a radio protocol layer for the mobile terminal.

Step 703: the SBS transmits to the MBS radio configuration information and random access resource information for the mobile terminal, so as to enable the mobile terminal to re-access the SBS.

The present disclosure further provides in this embodiment a mobile terminal communication control method for use in the mobile terminal. As shown in Fig.8, the method includes Steps 801 to 803.

Step 801: at the mobile terminal which accesses the MBS and the SBS simultaneously, when the RLF occurs for the SBS, the mobile terminal transmits to the MBS the RLF message indicative of the RLF occurring at the mobile terminal for the SBS.

Step 802: the mobile terminal receives from the MBS a re-access instruction message carrying radio configuration information and random access resource information which are received from the SBS after the MBS has transmitted to the SBS the RLF indication message indicative of the RLF occurring at the mobile terminal for the SBS.

Step 803: the mobile terminal re-accesses the SBS in accordance with the radio configuration information and the random access resource information.

According to the mobile terminal communication control methods in Figs.6-8, when the RLF occurs at the mobile terminal for the SBS, the mobile terminal may be controlled at first so as to re-access the SBS. As a result, the mobile terminal may be in the dual-connection mode again, so as to continuously ensure the communication quality of the mobile terminal.

The above-mentioned mobile terminal communication control method will be described hereinafter in conjunction with the drawings.

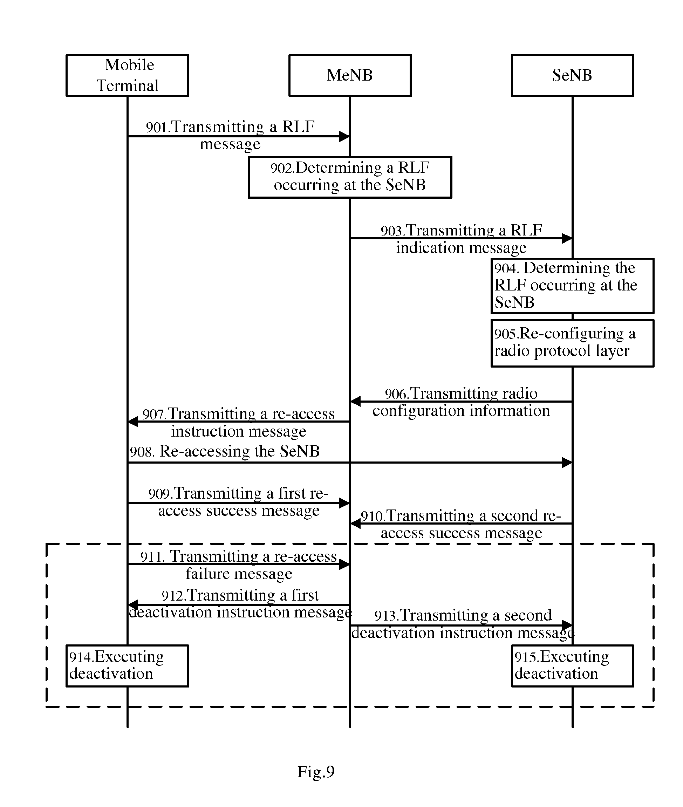

As shown in Fig.9 which is a flow chart of the mobile terminal communication control method according to the second embodiment of the present disclosure, the method includes Steps 901 to 915.

Step 901: at the mobile terminal in a dual-connection mode, i.e., the mobile terminal which accesses the MBS and the SBS simultaneously, when the RLF occurs for the SBS, the mobile terminal transmits to the MBS the RLF message indicative of the RLF occurring at the mobile terminal for the SBS. When it is impossible to acquire, at an MBS side, the SBS that the mobile terminal currently accesses, the RLF message may also carry a base station identifier of the SBS. The RLF message may be a RRC message.

Step 902: the MBS determines that the RLF occurs at the mobile terminal for the SBS in accordance with the RLF message.

Step 903: the MBS transmits to the SBS the RLF indication message indicative of the RLF occurring at the mobile terminal for the SBS.

Step 904: after the SBS has received from the MBS the RLF message, the SBS determines that the RLF occurs at the mobile terminal for the SBS in accordance with the RLF indication message.

Step 905: the SBS re-configures a radio protocol layer for the mobile terminal. In this step, the re-configured radio protocol layer may include a Packet Data Convergence Protocol (PDCP) layer, a Radio Link Control (RLC) layer, a Media Access Control (MAC) layer and a Physical Layer (PHY). In addition, the radio protocol layer may be re-configured as its initial one or as a desired one, as long as the mobile terminal may re-access the SBS in accordance with the re-configured radio protocol layer. Various ways known in the art may be adopted to re-configure the radio protocol layer, and they will not be particularly defined herein.

Step 906: after the SBS has re-configured the radio protocol layer for the mobile terminal, the SBS transmits to the MBS the radio configuration information and the random access resource information for the mobile terminal. The radio configuration information and the random access resource information may, on the basis of a current situation of the SBS, be allocated for the mobile terminal in accordance with a predetermined mechanism, as long as the mobile terminal may re-access the SBS in accordance with the radio configuration information and the random access resource information, which will not be particularly defined herein.

Step 907: after the MBS has received the radio configuration information and the random access resource information, the MBS transmits to the mobile terminal the re-access instruction message carrying the radio configuration information and the random access resource information. Alternatively, the re-access instruction message may further carry predetermined access times. The re-access instruction message may be a RRC message.

Step 908: after the mobile terminal has received the re-access instruction message, the mobile terminal acquires the radio configuration information and the random access resource information, and re-accesses the SBS in accordance with a random access resource represented by the random access resource information and the radio configuration information. A re-access result includes a successful re-access and a failed re-access. Alternatively, when the re-access instruction message carries the predetermined access times and the re-access failure occurs during re-accessing, the mobile terminal may re-access the SBS, until the re-access times reach the predetermined re-access times. At this time, it is determined that the mobile terminal fails to re-access the SBS.

Step 909: when the mobile terminal has re-accessed the SBS successfully, the mobile terminal transmits to the MBS a first re-access success message indicating that the mobile terminal has re-accessed the SBS successfully. The first re-access success message may be a RRC message.

Step 910: alternatively, when the mobile terminal has re-accessed the SBS successfully, the SBS transmits to the MBS a second re-access success message indicating that the mobile terminal has re-accessed the SBS successfully. When the mobile terminal has re-accessed the SBS successfully, the mobile terminal may be in the dual-connection mode again, i.e., it may continue to execute the communication through the MBS and the SBS simultaneously. When the mobile terminal fails to re-access the SBS, the following Steps 911 to 915 in a dotted block in Fig.9 may be performed.

Step 911: when the mobile terminal fails to re-access the SBS, the mobile terminal transmits to the MBS a re-access failure message indicating that the mobile terminal fails to re-access the SBS. The re-access failure message may be a RRC message.

Step 912: after the MBS has received from the mobile terminal the re-access failure message, the MBS transmits to the mobile terminal the first deactivation instruction message for instructing the mobile terminal to be deactivated for the SBS. The first deactivation instruction message may be a RRC message.

Step 913: after the MBS has received the re-access failure message, the MBS transmits to the SBS the second deactivation instruction message for instructing the SBS to be deactivated for the mobile terminal. The second deactivation instruction message may carry a terminal identifier of the mobile terminal.

Step 914: after the mobile terminal has received the first deactivation instruction message, the mobile terminal executes the deactivation for the SBS. In this step, various ways known in the related art may be adopted so as to enable the mobile terminal to be deactivated for the SBS, and they will not be particularly defined herein.

Step 915: after the SBS has received the second deactivation instruction message, the SBS executes the deactivation for the mobile terminal. In this step, various ways known in the related art may be adopted so as to enable the SBS to be deactivated for the mobile terminal, and they will not be particularly defined herein.

According to the mobile terminal communication control method in the second embodiment of the present disclosure, when the RLF occurs at the mobile terminal for the SBS, the mobile terminal may be controlled at first so as to re-access the SBS. As a result, the mobile terminal may be in the dual-connection mode again, so as to continuously ensure the communication quality of the mobile terminal.

When the mobile terminal fails to re-access the SBS, the MBS may transmit to the mobile terminal the first deactivation instruction, so as to instruct the mobile terminal to be deactivated for the SBS. After the mobile terminal is deactivated for the SBS, it is able for the mobile terminal to execute the effective communication merely through the MBS, thereby to prevent the occurrence of a communication failure when the mobile terminal continues to execute the communication through the SBS.

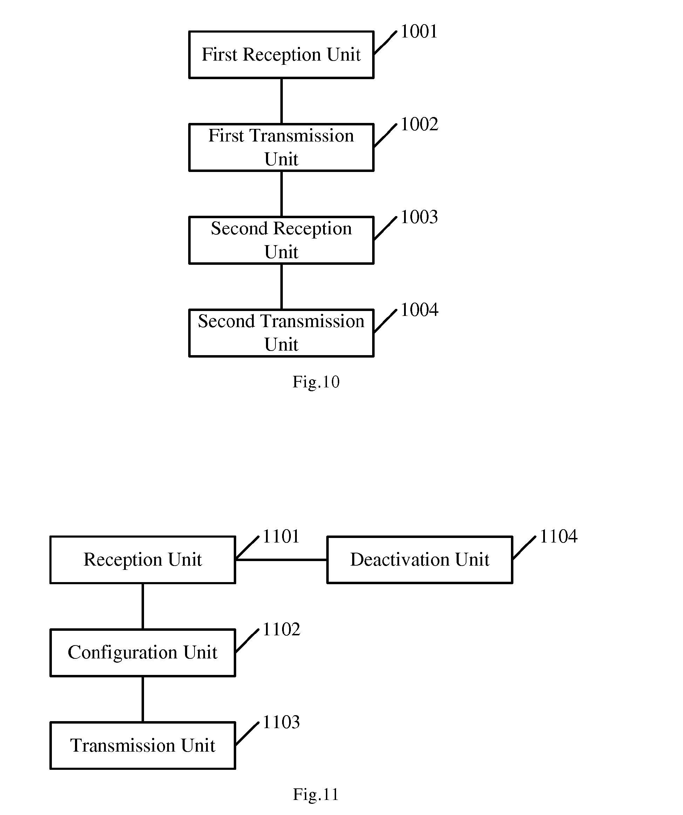

On the basis of the above-mentioned mobile terminal communication control method, the present disclosure further provides in the second embodiment a mobile terminal communication control device for use in the MBS. As shown in Fig.10, the device includes a first reception unit 1001, a first transmission unit 1002, a second reception unit 1003 and a second transmission unit 1004. The first reception unit 1001 is configured to receive from the mobile terminal the RLF message indicative of the RLF occurring at the mobile terminal for the SBS. The first transmission unit 1002 is configured transmit to the SBS the RLF indication message indicative of the RLF occurring at the mobile terminal for the SBS. The second reception unit 1003 is configured to receive the radio configuration information and the random access resource information for the mobile terminal returned after the SBS has received the RLF indication message. The second transmission unit 1004 is configured to transmit to the mobile terminal the re-access instruction message carrying the radio configuration information and the random access resource information, the re-access instruction message being used to instruct the mobile terminal to re-access the SBS in accordance with the radio configuration information and the random access resource information.

Alternatively, the first reception unit 1001 is further configured to, after the second transmission unit 1004 has transmitted to the mobile terminal the re-access instruction message, receive from the mobile terminal the first re-access success message indicating that the mobile terminal has re-accessed the SBS successfully. The second reception unit 1003 is further configured to, after the second transmission unit 1004 has transmitted to the mobile terminal the re-access instruction message, receive from the SBS a second re-access success message indicating that the mobile terminal has re-accessed the SBS.

Alternatively, the first reception unit 1001 is further configured to, after the second transmission unit 1004 has transmitted to the mobile terminal the re-access instruction message, receive from the mobile terminal a re-access failure message indicating that the mobile terminal fails to re-access the SBS.

The second transmission unit 1004 is further configured to transmit to the mobile terminal the first deactivation instruction message for instructing the mobile terminal to be deactivated for the SBS.

Alternatively, the first transmission unit 1002 is further configured to, after the first reception unit 1001 has received the re-access failure message from the mobile terminal, transmit to the SBS the second deactivation instruction message for instructing the SBS to be deactivated for the mobile terminal.

The functions of the above-mentioned units may correspond to the steps in Figs.6-9, and thus will not be repeated herein.

On the basis of the above-mentioned mobile terminal communication control method, the present disclosure provides in the second embodiment a mobile terminal communication control device for use in the SBS. As shown in Fig.11, the device includes a reception unit 1101, a configuration unit 1102 and a transmission unit 1103. The reception unit 1101 is configured to receive from the MBS the RLF message indicative of the RLF occurring at the mobile terminal for the SBS. The configuration unit 1102 is configured to re-configure the radio protocol layer for the mobile terminal. The transmission unit 1103 is configured to transmit to the MBS the radio configuration information and random access resource information for the mobile terminal, so as to enable the mobile terminal to re-access the SBS.

Alternatively, the transmission unit 1103 is further configured to, when the mobile terminal has re-accessed the SBS successfully, transmit to the MBS the second re-access success message indicating that the mobile terminal has re-accessed the SBS successfully.

Alternatively, the reception unit 1101 is further configured to receive from the MBS the second deactivation instruction message which is transmitted after the MBS has received from the mobile terminal a re-access failure message indicating that the mobile terminal fails to re-access the SBS. The mobile terminal communication control device further includes a deactivation unit 1104 configured to execute deactivation for the mobile terminal.

The functions of the above-mentioned units may correspond to the steps in Figs.6-9, and thus will not be repeated herein.

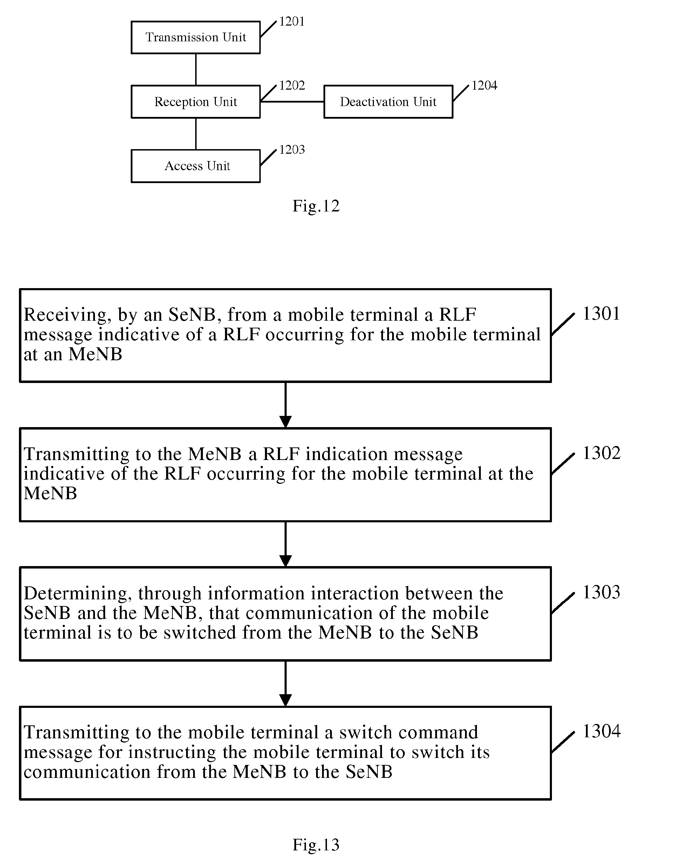

On the basis of the above-mentioned mobile terminal communication control method, the present disclosure further provides in the second embodiment a mobile terminal which accesses the MBS and the SBS simultaneously. As shown in Fig.12, the mobile terminal includes a transmission unit 1201, a reception unit 1201 and an access unit 1203. The transmission unit 1201 is configured to, when the RLF occurs at the mobile terminal for the SBS, transmit to the MBS the RLF message indicative of the RLF occurs at the mobile terminal for the SBS. The reception unit 1202 is configured to receive from the MBS the re-access instruction message carrying radio configuration information and random access resource information which are received after the MBS has transmitted to the SBS the RLF indication message indicative of the RLF occurring at the mobile terminal for the SBS. The access unit 1203 is configured to re-access the SBS in accordance with the radio configuration information and the random access resource information.

Alternatively, the transmission unit 1201 is configured to, when the mobile terminal has re-accessed the SBS successfully, transmit to the MBS the first re-access success message indicating that the mobile terminal has re-accessed the SBS successfully, and when the mobile terminal fails to re-access the SBS, transmit to the MBS the re-access failure message indicating that the mobile terminal fails to re-access the SBS.

Alternatively, the reception unit 1203 is further configured to, after the transmission unit 1201 has transmitted to the MBS the re-access failure message, receive from the MBS the first deactivation instruction message. The mobile terminal further includes a deactivation unit 1204 configured to execute deactivation for the SBS.

The functions of the above-mentioned units may correspond to the steps in Figs.6-9, and thus will not be repeated herein.

In a word, according to the embodiment of the present disclosure, the MBS receives from the mobile terminal the RLF message indicative of the

RLF occurring at the mobile terminal for the SBS, transmits to the SBS the RLF indication message indicative of the RLF occurring at the mobile terminal for the SBS, receives from the SBS the radio configuration information and the random access resource information for the mobile terminal returned after the SBS has received the RLF indication message, and transmits to the mobile terminal the re-access instruction message carrying the radio configuration information and the random access resource information so as to instruct the mobile terminal to re-access the SBS in accordance with the radio configuration information and the random access resource information. As a result, it is able to effectively control the communication of the mobile terminal in the dual-connection mode when the RLF occurs at the mobile terminal for the SBS.

### Third Embodiment

The present disclosure provides in this embodiment a mobile terminal communication control method for use in an SBS. As shown in Fig.13, the method includes Steps 1301 to 1304.

Step 1301: the SBS receives from a mobile terminal a RLF message indicative of a RLF occurring at the mobile terminal for an MBS

Step 1302: the SBS transmits to the MBS a RLF indication message indicative of the RLF occurring at the mobile terminal for the MBS.

1303: the SBS determines, through information interaction between the SBS and the MBS, that communication of the mobile terminal is to be switched from the MBS to the SBS.

Step 1304: the SBS transmits to the mobile terminal a switch command message for instructing the mobile terminal to switch its communication from the MBS to the SBS.

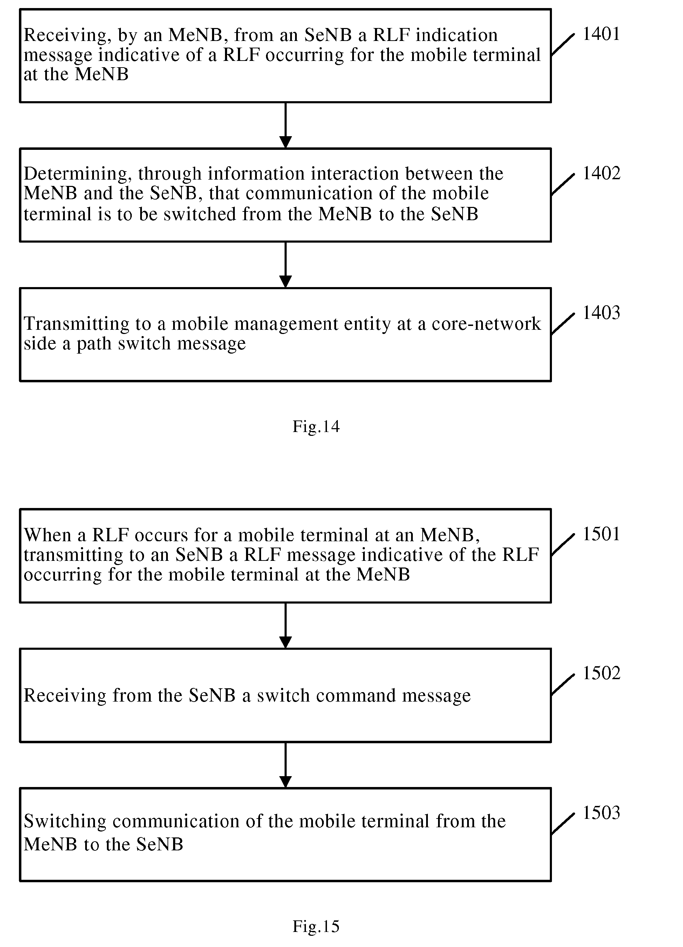

The present disclosure further provides in the third embodiment a mobile terminal communication control method for the MBS. As shown in Fig.14, the method includes Steps 1401 to 1403.

Step 1401: the MBS receives from the SBS the RLF indication message indicative of the RLF occurring at the mobile terminal for the MBS.

Step 1402: the MBS determines, through information interaction between the MBS and the SBS, that communication of the mobile terminal is to be switched from the MBS to the SBS.

Step 1403: the MBS transmits to a Mobile Management Entity (MME) at a core-network side a path switch message for requesting the switch of a path for the mobile terminal from the mobile management entity to the MBS into a path from the mobile management entity to the SBS.

The present disclosure further provides in the third embodiment a mobile terminal communication control method for use in a mobile terminal. As shown in Fig.15, the method includes Steps 1501 to 1503.

Step 1501: at the mobile terminal which accesses the MBS and the SBS simultaneously when the RLF occurs for the MBS, the mobile terminal transmits to the SBS the RLF message indicative of the RLF occurring at the mobile terminal for the MBS.

Step 1502: the mobile terminal receives from the SBS the switch command message for instructing the mobile terminal to switch its communication from the MBS to the SBS.

Step 1503: the mobile terminal switches the communication of the mobile terminal from the MBS to the SBS.

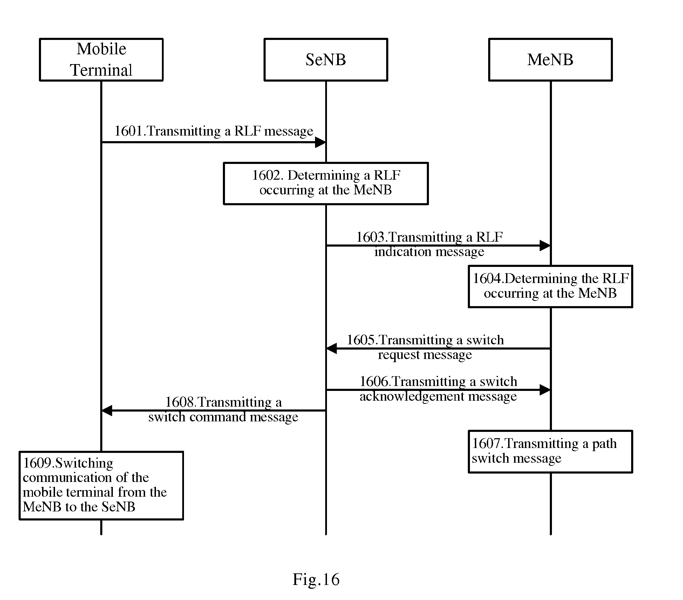

The above-mentioned mobile terminal communication control method will be described hereinafter in conjunction with the drawings. As shown in Fig.16, which is a flow chart of the mobile terminal communication control method according to the third embodiment of the present disclosure, the method includes Steps 1601 to 1609.

Step 1601: at the mobile terminal in the dual-connection mode, i.e., the mobile terminal which accesses the MBS and the SBS simultaneously, when the RLF occurs for the MBS, the mobile terminal transmits to the SBS the RLF message indicative of the RLF occurring at the mobile terminal for the MBS. The RLF message may be a RRC message.

Step 1602: after the SBS has received the RLF message, the SBS determines, in accordance with the RLF message, that the RLF occurs at the mobile terminal for the MBS.

Step 1603: the SBS transmits to the MBS the RLF indication message indicative of the RLF occurring at the mobile terminal for the MBS.

Step 1604: after the MBS has received the RLF indication message, the MBS determines, in accordance with the RLF indication message, that the RLF occurs at the mobile terminal for the MBS.

Step 1605: the MBS transmits to the SBS the switch request message for requesting the switch of the communication of the mobile terminal from the MBS to the SBS.

Step 1606: after the SBS has received from the MBS the switch request message, the SBS transmitting to the MBS the switch acknowledgement message for indicating that the communication of the mobile terminal is to be switched from the MBS to the SBS.

Step 1607: after the MBS has received from the SBS the switch acknowledge message, the MBS determines that the communication of the mobile terminal is to be switched from the MBS to the SBS, and transmits to the MME at the core-network side the path switch message for requesting the switch of the path for the mobile terminal from the MME to the MBS into the path from the MME to the SBS, i.e., performs the information interaction, which was originally required to be performed between the MME and the MBS, between the MME and SBS.

Step 1608: after the SBS determines that the communication of the mobile terminal is to be switched from the MBS to the SBS, the SBS transmits to the mobile the switch command message for instructing the mobile terminal to switch its communication from the MBS to the SBS. Alternatively, the switch command message may carry re-configuration information, and the switch command message may be a RRC message.

Step 1609: after the mobile terminal has received the switch command message, the mobile terminal switches the communication of the mobile terminal from the MBS to the SBS. In this step, the control plane information configured at the MBS may be deleted at first, then the data communication may be switched from the MBS to the SBS, and then the control plane information may be configured at the SBS. Alternatively, when the switch command message carries the re-configuration information, the control plane information may be configured at the SBS in accordance with the re-configuration information.

Alternatively, in the method as shown in Fig. 16 and provided by this embodiment of the present disclosure, after the MBS determines that the communication of the mobile terminal is to be switched from the MBS to the SBS and there is currently service data which is needed to be transmitted to the mobile terminal, the service data may also be transmitted to the SBS. After the SBS has received from the MBS the service data, the service data may be transmitted to the mobile terminal, so as to prevent the service data from being lost during the communication.

According to the above-mentioned mobile terminal communication control method in the third embodiment of the present disclosure, when the RLF occurs at the mobile terminal for the MBS, the RLF message may be transmitted to the SBS, so as to notify the SBS of the RLF occurring at the mobile terminal for the MBS. After the SBS has received the RLF message, through the information interaction between the SBS and the MBS, the mobile terminal may be controlled to switch its communication from the MBS to the SBS. As a result, after the switch, it is able to execute the effective communication merely through the SBS, thereby to prevent the occurrence of a communication failure when the mobile terminal continues to execute the communication through the MBS.

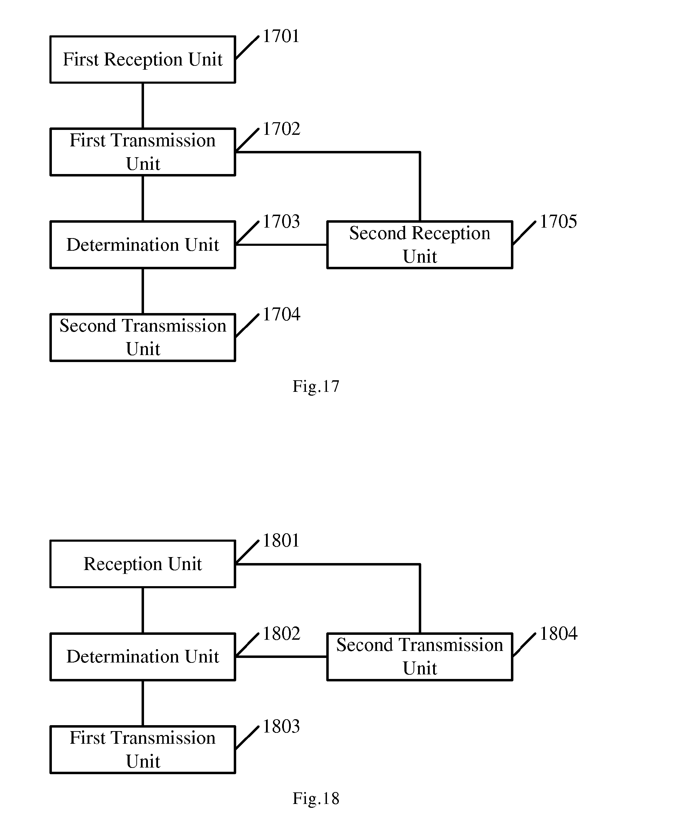

On the basis of the above-mentioned mobile terminal communication control method, the present disclosure further provides in the third embodiment a mobile terminal communication control device for use in the SBS. As shown in Fig.17, the device includes a first reception unit 1701, a first transmission unit 1702, a determination unit 1703 and a second transmission unit 1704. The first reception unit 1701 is configured to receive from the mobile terminal the RLF message indicative of the RLF occurring at the mobile terminal for the MBS. The first transmission unit 1702 is configured to transmit to the MBS the RLF indication message indicative of the RLF occurring at the mobile terminal for the MBS. The determination unit 1703 is configured to determine, through the information interaction between the SBS and the MBS, that communication of the mobile terminal is to be switched from the MBS to the SBS. The second transmission unit 1704 is configured to transmit to the mobile terminal the switch command message for instruct the mobile terminal to switch its communication from the MBS to the SBS.

Alternatively, the mobile terminal communication control device may further include a second reception unit 1705 configured to receive from the MBS the switch request message for requesting the switch of the communication of the mobile terminal from the MBS to the SBS. The first transmission unit 1702 is further configured to transmit to the MBS the switch acknowledgement message, and the determination unit 1703 is further configured to, after the first transmission unit has transmitted to the MBS the switch acknowledgement message, determine that the communication of the mobile terminal is to be switched from the MBS to the SBS.

Alternatively, the second reception unit 1705 is further configured to, after the determination unit determines that the communication of the mobile terminal is to be switched from the MBS to the SBS, receive from the MBS service data to be transmitted to the mobile terminal, and the second transmission unit 1704 is further configured to transmit to the mobile terminal the service data.

The functions of the above-mentioned units may correspond to the steps in Figs.13-16, and thus will not be repeated herein.

On the basis of the above-mentioned mobile terminal communication control method, the present disclosure further provides in the third embodiment a mobile terminal communication control device for use in the MBS. As shown in Fig.18, the device includes a reception unit 1801, a determination unit 1802 and a first transmission unit 1803. The reception unit 1801 is configured to receive from the SBS the RLF indication message indicative of the RLF occurring at the mobile terminal for the MBS. The determination unit 1802 is configured to determine, through the information interaction between the MBS and the SBS, that communication of the mobile terminal is to be switched from the MBS to the SBS. The first transmission unit 1803 is configured to transmit to the MME at the core-network side the path switch message for requesting the switch of a path for the mobile terminal from the MME to the MBS into a path from the MME to the SBS.

Alternatively, the mobile terminal communication control device may further include a second transmission unit 1804 configured to transmit to the SBS the switch request message for requesting the switch of the communication of the mobile terminal from the MBS to the SBS. The reception unit 1801 is further configured to receive from the SBS the switch acknowledgement message, and the determination unit 1802 is configured to determine, in accordance with the switch acknowledgement message, that the communication of the mobile terminal is to be switched from the MBS to the SBS.

Alternatively, the second transmission unit 1804 is further configured to, after the determination unit determines that the communication of the mobile terminal is to be switched from the MBS to the SBS, transmit to the SBS the service data to be transmitted to the mobile terminal, so that the SBS forwards the service data to the mobile terminal.

The functions of the above-mentioned units may correspond to the steps in Figs.13-16, and thus will not be repeated herein.

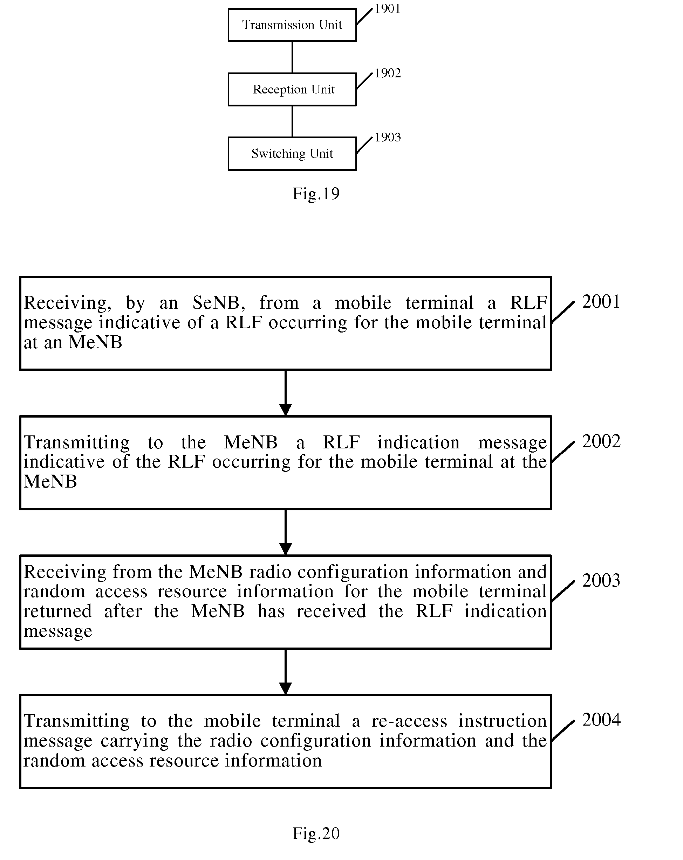

On the basis of the mobile terminal communication control method, the present disclosure further provides in the third embodiment a mobile terminal which accesses the MBS and the SBS simultaneously. As shown in Fig.19, the mobile terminal includes a transmission unit 1901, a reception unit 1902 and a switching unit 1903. The transmission unit 1901 is configured to, when the RLF occurs at the mobile terminal for the MBS, transmit to the SBS the RLF message indicative of the RLF occurring at the mobile terminal for the MBS. The reception unit 1902 is configured to receive the switch command message for instructing the mobile terminal to switch its communication from the MBS to the SBS. The switching unit 1903 is configured to switch the communication of the mobile terminal from the MBS to the SBS.

Alternatively, the switching unit 1903 is further configured to delete the control plane information configured at the MBS, switch the data communication from the MBS to the SBS, and configure the control plane information at the SBS.

The functions of the above-mentioned units may correspond to the steps in Figs.13-16, and thus will not be repeated herein.

In a word, according to the embodiment of the present disclosure, the SBS may receive from the mobile terminal the RLF message indicative of the RLF occurring at the mobile terminal for the MBS, transmit to the MBS the RLF indication message indicative of the RLF occurring at the mobile terminal for the MBS, determine, through the information interaction between the SBS and the MBS, that the communication of the mobile terminal is to be switched from the MBS to the SBS, and transmit to the mobile terminal the switch command message so as to instruct the mobile terminal to switch is communication from the MBS to the SBS. As a result, it is able to effectively control the communication of the mobile terminal in the dual-connection mode when the RLF occurs at the mobile terminal for the MBS.

### Fourth Embodiment

The present disclosure provides in this embodiment a mobile terminal communication control method for use in an SBS. As shown in Fig.20, the method includes Steps 2001 to 2004.

Step 2001: the SBS receives from a mobile terminal a RLF message indicative of a RLF occurring at the mobile terminal for an MBS.

Step 2002: the SBS transmits to the MBS a RLF indication message indicative of the RLF occurring at the mobile terminal for the MBS.

Step 2003: the SBS receives from the MBS radio configuration information and random access resource information for the mobile terminal returned after the MBS has received the RLF indication message.

Step 2004: the SBS transmits to the mobile terminal a re-access instruction message carrying the radio configuration information and the random access resource information, the re-access instruction message being used to instruct the mobile terminal to re-access the MBS in accordance with the radio configuration information and the random access resource information.

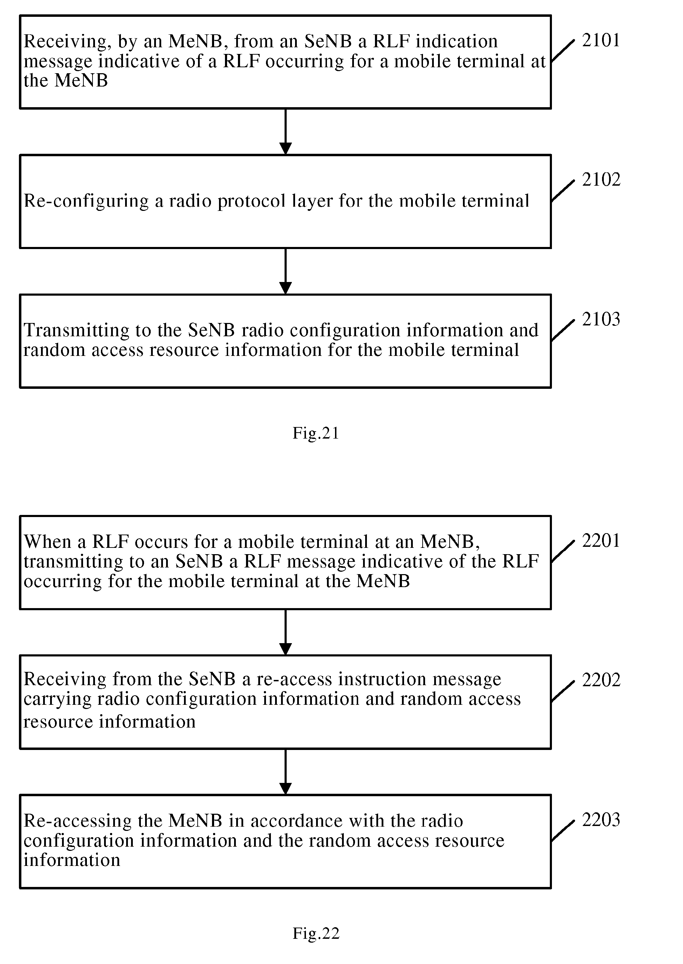

The present disclosure further provides in the fourth embodiment a mobile terminal communication control method for use in the MBS. As shown in Fig.21, the method includes Steps 2101 to 2103.

Step 2101: the MBS receives from the SBS a RLF indication message indicative of the RLF occurring at the mobile terminal for the MBS.

Step 2102: the MBS re-configures a radio protocol layer for the mobile terminal.

Step 2103: the MBS transmits to the SBS radio configuration information and random access resource information for the mobile terminal, so that the mobile terminal re-accesses the MBS.

The present disclosure further provides in the fourth embodiment a mobile terminal communication control method for use in the mobile terminal. As shown in Fig.22, the method includes Steps 2201 to 2203.

Step 2201: at the mobile terminal which accesses the MBS and the SBS simultaneously when the RLF occurs for the MBS, the mobile terminal transmits to the SBS the RLF message indicative of the RLF occurring at the mobile terminal for the MBS.

Step 2202: the mobile terminal receives from the SBS a re-access instruction message carrying the radio configuration information and the random access resource information which are received from the MBS after the SBS has transmitted to the MBS the RLF indication message indicative of the RLF occurring at the mobile terminal for the MBS.

Step 2203: the mobile terminal re-accesses the MBS in accordance with the radio configuration information and the random access resource information.

According to the mobile terminal communication control methods in Figs.20-22, when the RLF occurs at the mobile terminal for the MBS, the mobile terminal may be controlled at first to re-access the MBS. As a result, the mobile terminal may be in the dual-connection mode again, thereby to continuously ensure the communication quality of the mobile terminal.

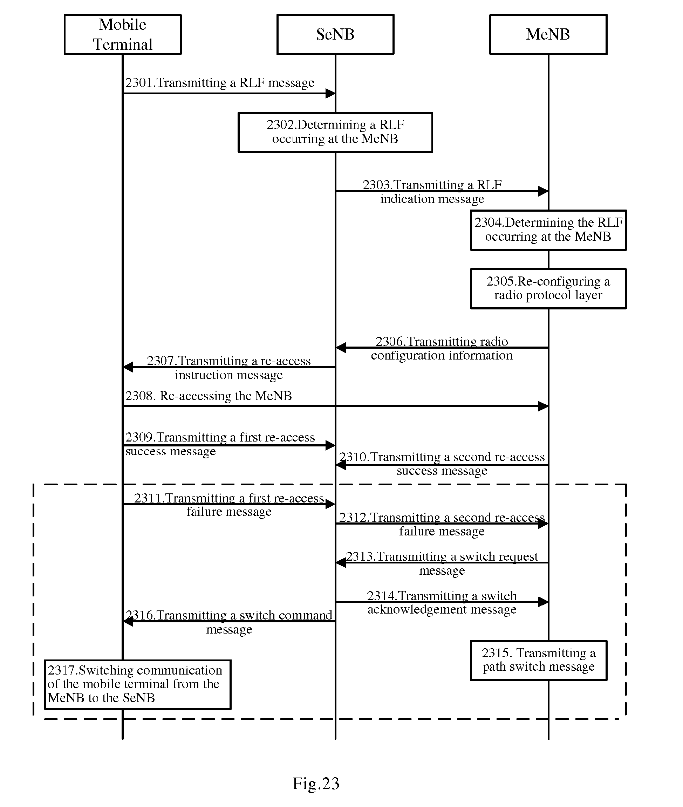

The above-mentioned mobile terminal communication control method will be described hereinafter in conjunction with the drawings. As shown in Fig.23, which is a flow chart of the mobile terminal communication control method according to the fourth embodiment of the present disclosure, the method includes Steps 2301 to 2317.

Step 2301: at the mobile terminal in the dual-connection mode, i.e., the mobile terminal which accesses the MBS and the SBS simultaneously, when the RLF occurs for the MBS, the mobile terminal transmits to the SBS the RLF message indicative of the RLF occurring at the mobile terminal for the MBS. The RLF message may be a RRC message.

Step 2302: the SBS determines that the RLF occurs at the mobile terminal for the MBS in accordance with the RLF message.

Step 2303: the SBS transmits to the MBS the RLF indication message indicative of the RLF occurring at the mobile terminal for the MBS.

Step 2304: the MBS determines that the RLF occurs at the mobile terminal for the MBS in accordance with the RLF indication message.

Step 2305: the MBS re-configures the radio protocol layer for the mobile terminal. In this step, the re-configured radio protocol layer may include a PDCP layer, a RLC layer, an MAC layer and a PHY layer. The radio protocol layer may be re-configured as an initial one, or as a desired one in accordance with the practical need, as long as the mobile terminal may re-access the MBS in accordance with the re-configured radio protocol layer. Various ways known in the related art may be adopted to re-configure the radio protocol layer, and they will not be particularly defined herein.

Step 2306: after the MBS has re-configured the radio protocol layer for the mobile terminal, the MBS transmits to the SBS the radio configuration information and the random access resource information for the mobile terminal, so as to enable the mobile terminal to re-access the MBS. On the basis of an actual situation of the MBS, the radio configuration information and the random access resource information may be allocated in accordance with a predetermined mechanism, as long as the mobile terminal may re-access the MBS in accordance with the radio configuration information and the random access resource information, which will not be repeated herein.

Step 2307: after the SBS has received from the MBS the radio configuration information and the random access resource information for the mobile terminal, the SBS transmits to the mobile terminal the re-access instruction message carrying the radio configuration information and the random access resource information. Alternatively, the re-access instruction information may further carry predetermined access times, and the re-access instruction message may be a RRC message.

Step 2308: after the mobile terminal has received the re-access instruction message, the mobile terminal acquires the radio configuration information and the random access resource information carried in the re-access instruction message, and re-accesses the MBS in accordance with a random access resource represented by the random access resource information and the radio configuration information. A re-access result includes a successful re-access and a failed re-access. Alternatively, when the re-access instruction message carries the predetermined access times and the re-access failures occurs, the mobile terminal may re-access the MBS, until the re-access times reach the predetermined re-access times. At this time, it is determined that the mobile terminal fails to re-access the MBS.

Step 2309: when the mobile terminal has re-accessed the MBS successfully, the mobile terminal transmits to the SBS a first re-access success message indicating that the mobile terminal has re-accessed the MBS successfully. The first re-access success message may be a RRC message.

Step 2310: alternatively, when the mobile terminal has re-accessed the MBS successfully, the MBS transmits to the SBS a second re-access success message indicating that the mobile terminal has re-accessed the MBS successfully.

When the mobile terminal has re-accessed the MBS successfully, the mobile terminal may be in the dual-connection mode again, i.e., it may continue to execute the communication through the MBS and the SBS simultaneously. When the mobile terminal fails to re-access the MBS, the following Steps 2311 to 2317 in a dotted block in Fig.23 may be performed.

Step 2311: when the mobile terminal fails to re-access the MBS, the mobile terminal transmits to the SBS a first re-access failure message indicating that the mobile terminal fails to re-access the MBS. The first re-access failure message may be a RRC message.

Step 2312: after the SBS has received from the mobile terminal the first re-access failure message, the SBS transmits to the MBS a second re-access failure message indicating that the mobile terminal fails to re-access the MBS.

Step 2313: after the MBS has received from the SBS the second re-access failure message, the MBS transmits to the SBS a switch request message for requesting the switch of the communication of the mobile terminal from the MBS to the SBS.

Step 2314: after the SBS has received from the MBS the switch request message, the SBS transmits to the MBS a switch acknowledgement message for indicating that the communication of the mobile terminal is to be switched from the MBS to the SBS.

Step 2315: after the MBS has received from the SBS the switch acknowledge message, the MBS determines that the communication of the mobile terminal is to be switched from the MBS to the SBS, and transmits to the MME at the core-network side the path switch message for requesting the switch of the path for the mobile terminal from the MME to the MBS into the path from the MME to the SBS, i.e., performs the information interaction, which was originally required to be performed between the MME and the MBS, between the MME and SBS.

Step 2316: after the SBS determines that the communication of the mobile terminal is to be switched from the MBS to the SBS, the SBS transmits to the mobile terminal a switch command message for instructing the mobile terminal to switch its communication from the MBS to the SBS. Alternatively, the switch command message may carry re-configuration information. The switch command message may be a RRC message.

Step 2317: after the mobile terminal has received from the SBS the switch command message, the mobile terminal switches the communication of the mobile terminal from the MBS to the SBS. In this step, the control plane information configured at the MBS may be deleted at first, then the data communication may be switched from the MBS to the SBS, and then the control plane information may be configured at the SBS. Alternatively, when the switch command message carries the re-configuration information, the control plane information may be configured at the SBS in accordance with the re-configuration information.

Alternatively, in the method as shown in Fig. 23 and provided by this embodiment of the present disclosure, after the MBS determines that the communication of the mobile terminal is to be switched from the MBS to the SBS and there is currently service data to be transmitted to the mobile terminal, the service data may also be transmitted to the SBS. After the SBS has received from the MBS the service data, the service data may be transmitted to the mobile terminal, so as to prevent the service data from being lost during the communication.

According to the mobile terminal communication control method in the fourth embodiment of the present disclosure, when the RLF occurs at the mobile terminal for the MBS, the mobile terminal may be controlled at first to re-access the MBS. As a result, the mobile terminal may be in the dual-connection mode again, thereby to continuously ensure the communication quality of the mobile terminal.

In addition, when the mobile terminal fails to re-access the MBS, through the information interaction between the SBS and the MBS, the communication of the mobile terminal may be switched from the MBS to the SBS. As a result, after the switch, it is able to execute the effective communication merely through the SBS, thereby to prevent the occurrence of a communication failure when the mobile terminal continues to execute the communication through the MBS.

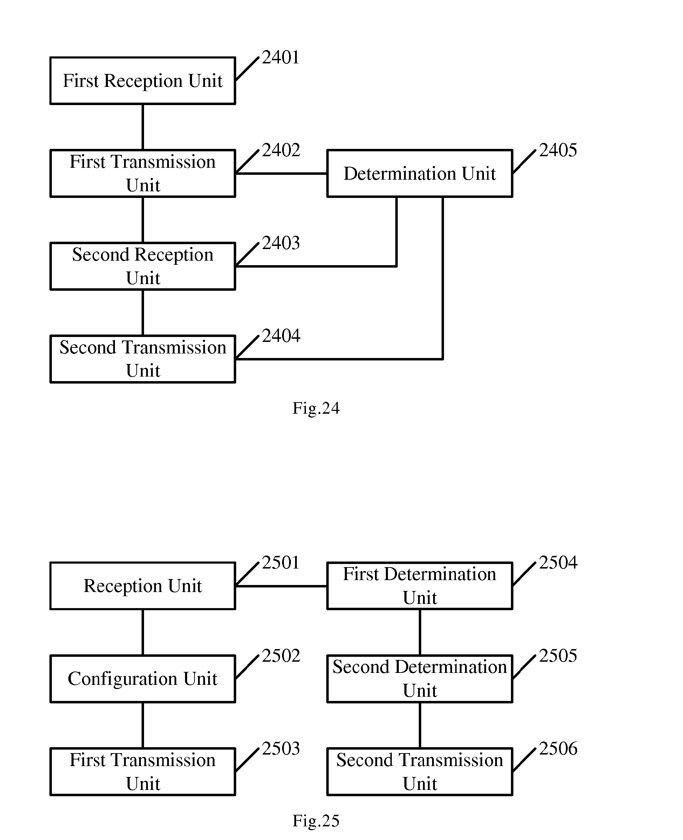

On the basis of the above-mentioned mobile terminal communication control method, the present disclosure further provides in the fourth embodiment a mobile terminal communication control device for use in the SBS. As shown in Fig.24, the device includes a first reception unit 2401, a first transmission unit 2402, a second reception unit 2403, and a second transmission unit 2404. The first reception unit 2401 is configured to receive from the mobile terminal the RLF message indicative of the RLF occurring at the mobile terminal for the MBS. The first reception unit 2402 is configured to transmit to the MBS the RLF indication message indicative of the RLF occurring at the mobile terminal for the MBS. The second reception unit 2403 is configured to receive from the MBS the radio configuration information and random access resource information for the mobile terminal returned after the MBS has received the RLF indication message. The second transmission unit 2404 is configured to transmit to the mobile terminal the re-access instruction message carrying the radio configuration information and the random access resource information, the re-access instruction message being used to instruct the mobile terminal to re-access the MBS in accordance with the radio configuration information and the random access resource information.

Alternatively, the first reception unit 2401 is further configured to, after the second transmission unit has transmitted to the mobile terminal the re-access instruction message, receive from the mobile terminal the first re-access success message indicating that the mobile terminal has accessed the MBS successfully. The second reception unit 2403 is further configured to, after the second transmission unit has transmitted to the mobile terminal the re-access instruction message, receive from the MBS the second re-access success message indicating that the mobile terminal has re-accessed the MBS successfully.

Alternatively, the first reception unit 2401 is further configured to, after the second transmission unit has transmitted to the mobile terminal the re-access instruction message, receive from the mobile terminal the first re-access failure message indicating that the mobile terminal fails to re-access the MBS. The first transmission unit 2402 is further configured to transmit to the MBS the second re-access failure message indicating that the mobile terminal fails to re-access the MBS.

The mobile terminal communication control device further includes a determination unit 2405 configured to determine, through the information interaction between the SBS and the MBS, that the communication of the mobile terminal is to be switched from the MBS to the SBS. The second transmission unit 2404 is further configured to transmit to the mobile terminal the switch command message for instructing the mobile terminal to switch its communication from the MBS to the SBS.

Alternatively, the second reception unit 2403 is further configured to receive from the MBS the switch request message for requesting the switch of the communication of the mobile terminal from the MBS to the SBS. The first transmission unit 2402 is further configured to transmit to the MBS the switch acknowledgement message. The determination unit 2405 is further configured to, after the first transmission unit has transmitted to the MBS the switch acknowledgement message, determine that the communication of the mobile terminal is to be switched from the MBS to the SBS.

Alternatively, the second reception unit 2403 is further configured to, after the determination unit determines that the communication of the mobile terminal is to be switched from the MBS to the SBS, receive from the MBS the service data to be transmitted to the mobile terminal, and the second transmission unit 2404 is further configured to transmit to the mobile terminal the service data.

The functions of the above-mentioned units may correspond to the steps in Figs.20-23, and thus will not be repeated herein.

On the basis of the above-mentioned mobile terminal communication control method, the present disclosure further provides in the fourth embodiment a mobile terminal communication control device for use in the MBS. As shown in Fig.25, the device includes a reception unit 2501, a configuration unit 2502 and a first transmission unit 2503. The reception unit 2501 is configured to receive from the SBS the RLF indication message indicative of the RLF occurring at the mobile terminal for the MBS. The configuration unit 2502 is configured to re-configure the radio protocol layer for the mobile terminal. The first transmission unit 2503 is configured to transmit to the SBS radio the configuration information and random access resource information for the mobile terminal, so that the mobile terminal re-accesses the MBS.

Alternatively, the first transmission unit 2503 is further configured to, when the mobile terminal has re-accessed the MBS successfully, transmit to the SBS the second re-access success message indicating that the mobile terminal has re-accessed the MBS successfully.

Alternatively, the reception unit 2501 is further configured to receive from the SBS the second re-access failure message indicating that the mobile terminal fails to re-access the MBS.

The device further includes a first determination unit 2504, a second determination unit 2505 and a second transmission unit 2506. The first determination unit 2504 is configured to determine, in accordance with the second re-access failure message, that the mobile terminal fails to re-access the MBS. The second determination unit 2505 is configured to determine, through the information interaction between the MBS and the SBS, that communication of the mobile terminal is to be switched from the MBS to the SBS. The second transmission unit 2506 is configured to transmit to the MME at the core-network side a path switch message for requesting the switch of a path for the mobile terminal from the MME to the MBS into a path from the mobile management entity to the SBS.

Alternatively, the first transmission unit 2503 is further configured to transmit to the SBS the switch request message for requesting the switch of the communication of the mobile terminal from the MBS to the SBS. The reception unit 2501 is further configured to receive from the SBS the switch acknowledgement message. The second determination unit 2505 is configured to determine, in accordance with the switch acknowledgement message, that the communication of the mobile terminal is to be switched from the MBS to the SBS.

Alternatively, the first transmission unit 2503 is further configured to, after the second determination unit determines that the communication of the mobile terminal is to be switched from the MBS to the SBS, transmit to the SBS the service data to be transmitted to the mobile terminal, so that the service data is forwarded to the mobile terminal through the SBS.

The functions of the above-mentioned units may correspond to the steps in Figs.20-23, and thus will not be repeated herein.

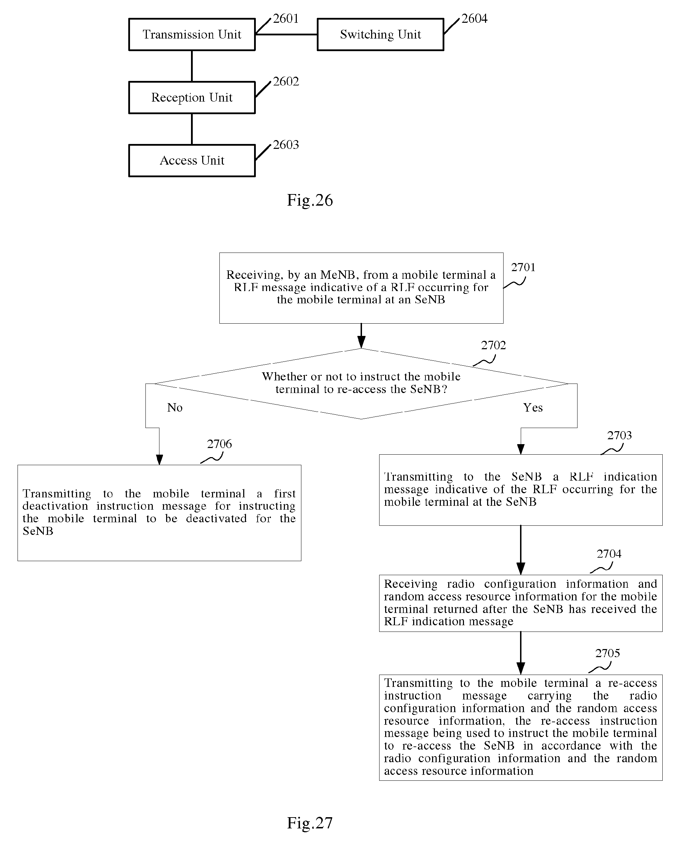

On the basis of the above-mentioned mobile terminal communication control method, the present disclosure further provides in the fourth embodiment a mobile terminal which accesses the MBS and the SBS simultaneously. As shown in Fig.26, the mobile terminal includes a transmission unit 2601, a reception unit 2602 and an access unit 2603. The transmission unit 2601 is configured to, when the RLF occurs at the mobile terminal for the MBS, transmit to the SBS the RLF message indicative of the RLF occurring at the mobile terminal for the MBS. The reception unit 2602 is configured to receive from the SBS the re-access instruction message carrying the radio configuration information and random access resource information which are received from the MBS after the SBS has transmitted to the MBS the RLF indication message indicative of the RLF occurring at the mobile terminal for the MBS. The access unit 2603 is configured to re-access the MBS in accordance with the radio configuration information and the random access resource information.

Alternatively, the transmission unit 2601 is further configured to, when the mobile terminal has re-accessed the MBS successfully, transmit to the SBS the first re-access success message indicating that the mobile has re-accessed the MBS successfully, and when the mobile terminal fails to re-access the MBS, transmit to the SBS the first re-access failure message indicating that the mobile terminal fails to re-access the MBS.

Alternatively, the reception unit 2602 is further configured to, after the transmission unit has transmitted to the SBS the first re-access failure message, receive from the SBS the switch command message for instructing the mobile terminal to switch its communication from the MBS to the SBS.

Alternatively, the mobile terminal further includes a switching unit 2604 configured to switch the communication of the mobile terminal from the MBS to the SBS.

Alternatively, the switching unit 2604 is configured to delete the control plane information configured at the MBS, switch the data communication from the MBS to the SBS, and configure the control plane information at the SBS.

The functions of the above-mentioned units may correspond to the steps in Steps 20-23, and thus will not be repeated herein.

In a word, according to the embodiment of the present disclosure, the SBS may receive from the mobile terminal the RLF Message indicative of the RLF occurring at the mobile terminal for the MBS, transmit to the MBS the RLF indication message indicative of the RLF occurring at the mobile terminal for the MBS, receive the radio configuration information and the random access resource information for the mobile terminal returned after the MBS has received the RLF message, and transmit to the mobile terminal the re-access instruction message carrying the radio configuration information and the random access resource information so as to instruct the mobile terminal to re-access the MBS in accordance with the radio configuration information and the random access resource information. As a result, it is able to effectively control the communication of the mobile terminal in the dual-connection mode when the RLF occurs at the mobile terminal for the MBS.

The present disclosure further provides in one embodiment a mobile terminal communication control method for use in an MBS. As shown in Fig.27, the method includes Steps 2701 to 2706.

Step 2701: the MBS receives from a mobile terminal a RLF message indicative of a RLF occurring at the mobile terminal for an SBS.

Step 2702: the MBS determines whether or not to instruct the mobile terminal to re-access the SBS, if yes, proceeding to Step 2703, and otherwise, proceeding to Step 2706. During the actual application, the MBS may determine whether or not to instruct the mobile terminal to re-access the SBS in accordance with a load condition of the SBS or a network condition of the mobile terminal.

Step 2703: the MBS transmits to the SBS a RLF indication message indicative of the RLF occurring at the mobile terminal for the SBS.

Step 2704: the MBS receives radio configuration information and random access resource information for the mobile terminal returned after the SBS has received the RLF indication message.

Step 2705: the MBS transmits to the mobile terminal a re-access instruction message carrying the radio configuration information and the random access resource information, the re-access instruction message being used to instruct the mobile terminal to re-access the SBS in accordance with the radio configuration information and the random access resource information.

Step 2706: the MBS transmits to the mobile terminal a first deactivation instruction message for instructing the mobile terminal to be deactivated for the SBS.

The deactivation of the mobile terminal for the SBS in this embodiment may refer to the relevant contents in the first embodiment, and the re-access of the mobile terminal to the SBS in accordance with the radio configuration information and the random access resource information may refer to the relevant contents in the second embodiment.

Alternatively, when the mobile terminal fails to re-access the SBS, it may transmit to the MBS a re-access failure message indicating that the mobile terminal fails to re-access the SBS. At this time, the MBS may perform Step 2706, so as to instruct the mobile terminal to be deactivated for the SBS.

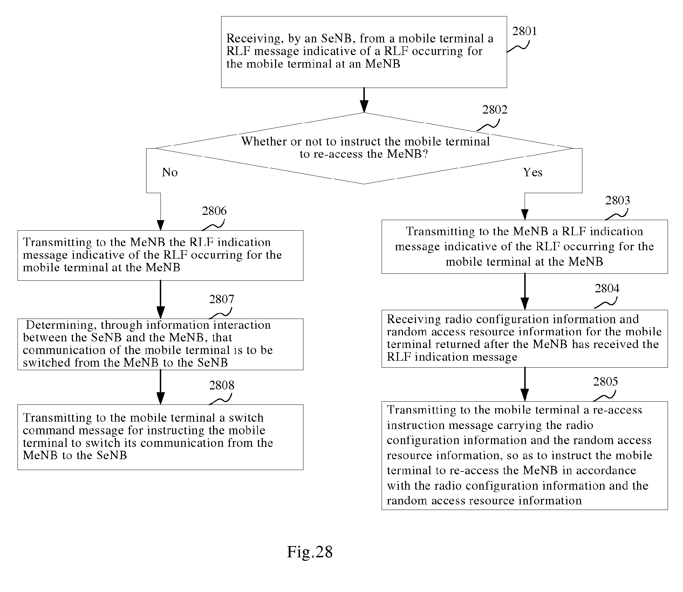

The present disclosure further provides in one embodiment a mobile terminal communication control method for use in an SBS. As shown in Fig.28, the method includes Steps 2801 to 2808.

Step 2801: the SBS receives from a mobile terminal a RLF message indicative of a RLF occurring at the mobile terminal for an MBS.

Step 2802: the SBS determines whether or not to instruct the mobile terminal to re-access the MBS, if yes, proceeding to Step 2803, and otherwise, proceeding to Step 2806. During the actual application, the SBS may determine whether or not instruct the mobile terminal to re-access the MBS in accordance with a load condition of the MBS or a network condition of the mobile terminal.

Step 2803: the SBS transmits to the MBS a RLF indication message indicative of the RLF occurring at the mobile terminal for the MBS.

Step 2804: the SBS receives radio configuration information and random access resource information for the mobile terminal returned after the MBS has received the RLF indication message.

Step 2805: the SBS transmits to the mobile terminal a re-access instruction message carrying the radio configuration information and the random access resource information, so as to instruct the mobile terminal to re-access the MBS in accordance with the radio configuration information and the random access resource information.

Step 2806: the SBS transmits to the MBS the RLF indication message indicative of the RLF occurring at the mobile terminal for the MBS.

Step 2807: the SBS determines, through information interaction between the SBS and the MBS, that communication of the mobile terminal is to be switched from the MBS to the SBS.

Step 2808: the SBS transmits to the mobile terminal a switch command message for instructing the mobile terminal to switch its communication from the MBS to the SBS.

The re-access of the mobile terminal to the MBS in accordance with the radio configuration information and the random access resource information may refer to the relevant contents in the fourth embodiment.

Alternatively, when the mobile terminal fails to re-access the MBS, the mobile terminal may transmit to the SBS a first re-access failure message indicating that the mobile terminal fails to re-access the MBS. After the SBS has received from the mobile terminal the first re-access failure message, it may transmit to the MBS a second re-access failure message indicating that the mobile terminal fails to re-access the MBS. After the MBS has received from the SBS the second re-access failure message, Steps 2807 and 2808 may be performed so as to enable the mobile terminal to switch its communication from the MBS to the SBS.

The switch of the communication of the mobile terminal from the MBS to the SBS may refer to the relevant contents in the third embodiment.

The mobile terminal communication control devices in the embodiments of the present disclosure may be implemented by computer programs. It should be appreciated that, the above-mentioned module division mode is merely one of the various module division modes. With any other modules or without any module, the mobile terminal communication control devices shall also fall within the scope of the present disclosure, as long as they have the above-mentioned functions.

The present disclosure is described with reference to the flow charts and/or block diagrams showing the method, device (system) and computer program product according to the embodiments of the present disclosure. It should be appreciated that each process and/or block, or combinations thereof, in the flow charts and/or block diagrams may be implemented via computer program commands. These computer program commands may be applied to a general-purpose computer, a special-purpose computer, an embedded processor or any other processor of programmable data processing equipment, so as to form a machine, thereby to obtain the means capable of effecting the functions specified in one or more processes in the flow charts and/or one or more blocks in the block diagrams in accordance with the commands executed by the computer or the processor of the other programmable data processing equipment.

These computer program commands may also be stored in a computer-readable memory capable of guiding the computer or the other programmable data processing equipment to work in a special manner, so as to form a product including a command device capable of effecting the functions specified in one or more processes in the flow charts and/or one or more blocks in the block diagrams.

These computer program commands may also be loaded onto a computer or the other programmable data processing equipment, so as to perform a series of operations thereon and generate the processings implemented by the computer, thereby to provide the steps capable of effecting the functions specified one or more processes in the flow charts and/or one or more blocks in the block diagrams in accordance with the instructions.

The above are merely the preferred embodiments of the present disclosure. Obviously, a person skilled in the art may make further modifications and improvements without departing from the spirit of the present disclosure, and these modifications and improvements shall also fall within the scope of the present disclosure.

## Claims

1. A mobile terminal communication control method, comprising steps of:
receiving, by a master base station (MBS), from a mobile terminal a Radio Link Failure (RLF) message indicative of a RLF occurring at the mobile terminal for a slave base station (SBS); and
transmitting, by the MBS, to the mobile terminal a first deactivation instruction message for instructing the mobile terminal to be deactivated for the SBS.

2. The mobile terminal communication control method according to claim 1, wherein subsequent to the step of receiving, by the MBS, from the mobile terminal the RLF message indicative of the RLF occurring at the mobile terminal for the SBS, the mobile terminal communication control method further comprises transmitting to the SBS a second deactivation instruction message for instructing the SBS to be deactivated for the mobile terminal.

3. A mobile terminal communication control method, comprising steps of:
at a mobile terminal which accesses a master base station (MBS) and a slave base station (SBS) simultaneously, when a Radio Link Failure (RLF) occurs for the SBS, transmitting to the MBS a RLF message indicative of the RLF occurring at the mobile terminal for the SBS;
receiving a first deactivation instruction message from the MBS for instructing the mobile terminal to be deactivated for the SBS; and
executing deactivation for the SBS.

4. A mobile terminal communication control device for use in a master base station (MBS), comprising:
a reception unit configured to receive from a mobile terminal a Radio Link Failure (RLF) message indicative of a RLF occurring at the mobile terminal for a slave base station (SBS); and
a transmission unit configured to transmit to the mobile terminal a first deactivation instruction message for instructing the mobile terminal to be deactivated for the SBS.

5. A mobile terminal accessing a master base station (MBS) and a slave base station (SBS), comprising:
a transmission unit configured to, when a Radio Link Failure (RLF) occurs at the mobile terminal for the SBS, transmit to the MBS a RLF message indicative of the RLF occurring at the mobile terminal for the SBS;
a reception unit configured to receive from the MBS a first deactivation instruction message for instructing the mobile terminal to be deactivated for the SBS; and
a deactivation unit configured to execute deactivation for the SBS.

6. A mobile terminal communication control method, comprising steps of:
receiving, by a master base station (MBS), from a mobile terminal a Radio Link Failure (RLF) message indicative of a RLF occurring at the mobile terminal for a slave base station (SBS);
transmitting to the SBS a RLF indication message indicative of the RLF occurring at the mobile terminal for the SBS;
receiving radio configuration information and random access resource information for the mobile terminal returned after the SBS has received the RLF indication message; and
transmitting to the mobile terminal a re-access instruction message carrying the radio configuration information and the random access resource information, the re-access instruction message being used to instruct the mobile terminal to re-access the SBS in accordance with the radio configuration information and the random access resource information.

7. The mobile terminal communication control method according to claim 6, wherein subsequent to the step of transmitting to the mobile terminal the re-access instruction message, the mobile terminal communication control method further comprises:
receiving from the mobile terminal a first re-access success message indicating that the mobile terminal has re-accessed the SBS successfully; and/or
receiving from the SBS a second re-access success message indicating that the mobile terminal has re-accessed the SBS successfully.

8. The mobile terminal communication control method according to claim 6 or 7, wherein subsequent to the step of transmitting to the mobile terminal the re-access instruction message, the mobile terminal communication control method further comprises:
receiving from the mobile terminal a re-access failure message indicating that the mobile terminal fails to re-access the SBS; and
transmitting to the mobile terminal a first deactivation instruction message for instructing the mobile terminal to be deactivated for the SBS.

9. The mobile terminal communication control method according to claim 8, wherein subsequent to the step of receiving the re-access failure message from the mobile terminal, the method further comprises transmitting to the SBS a second deactivation instruction message for instructing the SBS to be deactivated for the mobile terminal.

10. A mobile terminal communication control method, comprising steps of:
receiving, by a slave base station (SBS), from a master base station (MBS) a Radio Link Failure (RLF) indication message indicative of a RLF occurring at a mobile terminal for the SBS;
re-configuring a radio protocol layer for the mobile terminal; and
transmitting to the MBS radio configuration information and random access resource information for the mobile terminal, so as to enable the mobile terminal to re-access the SBS.

11. The mobile terminal communication control method according to claim 10, further comprising:
when the mobile terminal has re-accessed the SBS successfully, transmitting to the MBS a second re-access success message indicating that the mobile terminal has re-accessed the SBS successfully.

12. The mobile terminal communication control method according to claim 10 or 11, further comprising:
receiving from the MBS a second deactivation instruction message which is transmitted by the MBS after it has received from the mobile terminal a re-access failure message indicating that the mobile terminal fails to re-access the SBS; and
executing deactivation for the mobile terminal.

13. A mobile terminal communication control method, comprising steps of:
at a mobile terminal which accesses a master base station (MBS) and a slave base station (SBS) simultaneously, when a Radio Link Failure (RLF) occurs for the SBS, transmitting to the MBS a RLF message indicative of the RLF occurring at the mobile terminal for the SBS;
receiving from the MBS a re-access instruction message carrying radio configuration information and random access resource information which are received from the SBS after the MBS has transmitted to the SBS the RLF indication message indicative of the RLF occurring at the mobile terminal for the SBS; and
re-accessing the SBS in accordance with the radio configuration information and the random access resource information.

14. The mobile terminal communication control method according to claim 13, further comprising:
when the mobile terminal has re-accessed the SBS successfully, transmitting to the MBS a first re-access success message indicating that the mobile terminal has re-accessed the SBS successfully; and
when the mobile terminal fails to re-access the SBS, transmitting to the MBS a re-access failure message indicating that the mobile terminal fails to re-access the SBS.

15. The mobile terminal communication control method according to claim 14, wherein subsequent to the step of transmitting to the MBS the re-access failure message, the mobile terminal communication control method further comprises:
receiving from the MBS a first deactivation instruction message for instructing the mobile terminal to be deactivated for the SBS; and
executing deactivation for the SBS.

16. A mobile terminal communication control device for use in a master base station (MBS), comprising:
a first reception unit configured to receive from a mobile terminal a Radio Link Failure (RLF) message indicative of a RLF occurring at the mobile terminal for a slave base station (SBS);
a first transmission unit configured to transmit to the SBS a RLF indication message indicative of the RLF occurring at the mobile terminal for the SBS;
a second reception unit configured to receive radio configuration information and random access resource information for the mobile terminal returned after the SBS has received the RLF indication message; and
a second transmission unit configured to transmit to the mobile terminal a re-access instruction message carrying the radio configuration information and the random access resource information, the re-access instruction message being used to instruct the mobile terminal to re-access the SBS in accordance with the radio configuration information and the random access resource information.

17. A mobile terminal communication control device for use in a slave base station (SBS), comprising:
a reception unit configured to receive from a master base station (MBS) a Radio Link Failure (RLF) message indicative of a RLF occurring at a mobile terminal for the SBS;
a configuration unit configured to re-configure a radio protocol layer for the mobile terminal; and
a transmission unit configured to transmit to the MBS radio configuration information and random access resource information for the mobile terminal, so as to enable the mobile terminal to re-access the SBS.

18. A mobile terminal accessing a master base station (MBS) and a slave base station (SBS), comprising:
a transmission unit configured to, when a Radio Link Failure (RLF) occurs at the mobile terminal for the SBS, transmit to the MBS a RLF message indicative of the RLF occurs at the mobile terminal for the SBS;
a reception unit configured to receive from the MBS a re-access instruction message carrying radio configuration information and random access resource information which are received after the MBS has transmitted to the SBS a RLF indication message indicative of a RLF occurring at the mobile terminal for the SBS; and
an access unit configured to re-access the SBS in accordance with the radio configuration information and the random access resource information.

19. A mobile terminal communication control method, comprising steps of:
receiving, by a slave base station (SBS), from a mobile terminal a Radio Link Failure (RLF) message indicative of a RLF occurring at the mobile terminal for a master base station (MBS);
transmitting to the MBS a RLF indication message indicative of the RLF occurring at the mobile terminal for the MBS;
determining, through information interaction between the SBS and the MBS, that communication of the mobile terminal is to be switched from the MBS to the SBS; and
transmitting to the mobile terminal a switch command message for instructing the mobile terminal to switch its communication from the MBS to the SBS.

20. The mobile terminal communication control method according to claim 19, wherein the step of determining, through the information interaction between the SBS and the MBS, that the communication of the mobile terminal is to be switched from the MBS to the SBS comprises:
receiving from the MBS a switch request message for requesting the switch of the communication of the mobile terminal from the MBS to the SBS; and
transmitting to the MBS a switch acknowledgement message for indicating that the communication of the mobile terminal is to be switched from the MBS to the SBS.

21. The mobile terminal communication control method according to claim 19 or 20, wherein subsequent to the step of determining that the communication of the mobile terminal is to be switched from the MBS to the SBS, the mobile terminal communication control method further comprises:
receiving from the MBS service data to be transmitted to the mobile terminal; and
transmitting to the mobile terminal the service data.

22. A mobile terminal communication control method, comprising steps of:
receiving, by a master base station (MBS), from a slave base station (SBS) a Radio Link Failure (RLF) indication message indicative of a RLF occurring at a mobile terminal for the MBS;
determining, through information interaction between the MBS and the SBS, that communication of the mobile terminal is to be switched from the MBS to the SBS; and
transmitting to a mobile management entity at a core-network side a path switch message for requesting the switch of a path for the mobile terminal from the mobile management entity to the MBS into a path from the mobile management entity to the SBS.

23. The mobile terminal communication control method according to claim 22, wherein the step of determining, through the information interaction between the MBS and the SBS, that the communication of the mobile terminal is to be switched from the MBS to the SBS comprises:
transmitting to the SBS a switch request message for requesting the switch of the communication of the mobile terminal from the MBS to the SBS;
receiving from the SBS a switch acknowledgement message; and
determining, in accordance with the switch acknowledgement message, that the communication of the mobile terminal is to be switched from the MBS to the SBS.

24. The mobile terminal communication control method according to claim 22 or 23, wherein subsequent to the step of determining that the communication of the mobile terminal is to be switched from the MBS to the SBS, the mobile terminal communication control method further comprises:
transmitting to the SBS, service data to be transmitted to the mobile terminal, so that the SBS transmits the service data to the mobile terminal.

25. A mobile terminal communication control method, comprising steps of:
at a mobile terminal which accesses a master base station (MBS) and a slave base station (SBS) simultaneously, when a Radio Link Failure (RLF) occurs for the MBS, transmitting to the SBS a RLF message indicative of the RLF occurring at the mobile terminal for the MBS;
receiving from the SBS a switch command message for instructing the mobile terminal to switch its communication from the MBS to the SBS; and
switching the communication of the mobile terminal from the MBS to the SBS.

26. The mobile terminal communication control method according to claim 25, wherein the step of switching the communication of the mobile terminal from the MBS to the SBS comprises:
deleting control plane information configured at the MBS;
switching data communication from the MBS to the SBS; and
configuring control plane information at the SBS.

27. A mobile terminal communication control device for use in a slave base station (SBS), comprising:
a first reception unit configured to receive from a mobile terminal a Radio Link Failure (RLF) message indicative of a RLF occurring at the mobile terminal for a master base station (MBS);
a first transmission unit configured to transmit to the MBS a RLF indication message indicative of the RLF occurring at the mobile terminal for the MBS;
a determination unit configured to determine, through information interaction between the SBS and the MBS, that communication of the mobile terminal is to be switched from the MBS to the SBS; and
a second transmission unit configured to transmit to the mobile terminal a switch command message for instruct the mobile terminal to switch its communication from the MBS to the SBS.

28. A mobile terminal communication control device for use in a master base station (MBS), comprising:
a reception unit configured to receive from a slave base station (SBS) a Radio Link Failure (RLF) indication message indicative of a RLF occurring at a mobile terminal for the MBS;
a determination unit configured to determine, through information interaction between the MBS and the SBS, that communication of the mobile terminal is to be switched from the MBS to the SBS; and
a first transmission unit configured to transmit to a mobile management entity at a core-network side a path switch message for requesting the switch of a path for the mobile terminal from the mobile management entity to the MBS into a path from the mobile management entity to the SBS.

29. A mobile terminal accessing a master base station (MBS) and a slave base station (SBS), comprising:
a transmission unit configured to, when a Radio Link Failure (RLF) occurs at the mobile terminal for the MBS, transmit to the SBS a RLF message indicative of the RLF occurring at the mobile terminal for the MBS;
a reception unit configured to receive from the SBS a switch command message for instructing the mobile terminal to switch its communication from the MBS to the SBS; and
a switching unit configured to switch the communication of the mobile terminal from the MBS to the SBS.

30. A mobile terminal communication control method, comprising steps of:
receiving, by a slave base station (SBS), from a mobile terminal a Radio Link Failure (RLF) message indicative of a RLF occurring at the mobile terminal for a master base station (MBS);
transmitting to the MBS a RLF indication message indicative of the RLF occurring at the mobile terminal for the MBS;
receiving from the MBS radio configuration information and random access resource information for the mobile terminal returned after the MBS has received the RLF indication message; and
transmitting to the mobile terminal a re-access instruction message carrying the radio configuration information and the random access resource information, the re-access instruction message being used to instruct the mobile terminal to re-access the MBS in accordance with the radio configuration information and the random access resource information.

31. The mobile terminal communication control method according to claim 30, wherein subsequent to the step of transmitting to the mobile terminal the re-access instruction message, the mobile terminal communication control method further comprises:
receiving from the mobile terminal a first re-access success message indicating that the mobile terminal has accessed the MBS successfully; and/or
receiving from the MBS a second re-access success message indicating that the mobile terminal has accessed the MBS successfully.

32. The mobile terminal communication control method according to claim 30 or 31, wherein subsequent to the step of transmitting to the mobile terminal the re-access instruction message, the mobile terminal communication control method further comprises:
receiving from the mobile terminal a first re-access failure message indicating that the mobile terminal fails to re-access the MBS;
transmitting to the MBS a second re-access failure message indicating that the mobile terminal fails to re-access the MBS;
determining, through information interaction between the SBS and the MBS, that communication of the mobile terminal is to be switched from the MBS to the SBS; and
transmitting to the mobile terminal a switch command message for instructing the mobile terminal to switch its communication from the MBS to the SBS.

33. The mobile terminal communication control method according to claim 32, wherein the step of determining, through the information interaction between the SBS and the MBS, that the communication of the mobile terminal is to be switched from the MBS to the SBS comprises:
receiving from the MBS a switch request message for requesting the switch of the communication of the mobile terminal from the MBS to the SBS; and
transmitting to the MBS a switch acknowledgement message for indicating that the communication of the mobile terminal is to be switched from the MBS to the SBS.

34. The mobile terminal communication control method according to claim 32, wherein subsequent to the step of determining that the communication of the mobile terminal is to be switched from the MBS to the SBS, the mobile terminal communication control method further comprises:
receiving from the MBS, service data to be transmitted to the mobile terminal; and
transmitting to the mobile terminal the service data.

35. A mobile terminal communication control method, comprising steps of:
receiving, by a master base station (MBS), from a slave base station (SBS) a Radio Link Failure (RLF) indication message indicative of a RLF occurring at a mobile terminal for the MBS;
re-configuring a radio protocol layer for the mobile terminal; and
transmitting to the SBS radio configuration information and random access resource information for the mobile terminal, so that the mobile terminal re-accesses the MBS.

36. The mobile terminal communication control method according to claim 35, further comprising:
when the mobile terminal has re-accessed the MBS successfully, transmitting to the SBS a second re-access success message indicating that the mobile terminal has re-accessed the MBS successfully.

37. The mobile terminal communication control method according to claim 35 or 36, further comprising:
receiving from the SBS a second re-access failure message indicating that the mobile terminal fails to re-access the MBS;
determining, in accordance with the second re-access failure message, that the mobile terminal fails to re-access the MBS;
determining, through information interaction between the MBS and the SBS, that communication of the mobile terminal is to be switched from the MBS to the SBS; and
transmitting to a mobile management entity at a core-network side a path switch message for requesting the switch of a path for the mobile terminal from the mobile management entity to the MBS into a path from the mobile management entity to the SBS.

38. The mobile terminal communication control method according to claim 37, wherein the step of determining, through the information interaction between the MBS and the SBS, that the communication of the mobile terminal is to be switched from the MBS to the SBS comprises:
transmitting to the SBS a switch request message for requesting the switch of the communication of the mobile terminal from the MBS to the SBS;
receiving from the SBS a switch acknowledgement message; and
determining, in accordance with the switch acknowledgement message, that the communication of the mobile terminal is to be switched from the MBS to the SBS.

39. The mobile terminal communication control method according to claim 37, wherein subsequent to the step of determining that the communication of the mobile terminal is to be switched from the MBS to the SBS, the mobile terminal communication control method further comprises:
transmitting to the SBS, service data to be transmitted to the mobile terminal, so that the service data is forwarded to the mobile terminal through the SBS.

40. A mobile terminal communication control method, comprising steps of:
at a mobile terminal which accesses a master base station (MBS) and a slave base station (SBS) simultaneously, when a Radio Link Failure (RLF) occurs for the MBS, transmitting to the SBS the RLF message indicative of the RLF occurring at the mobile terminal for the MBS;
receiving from the SBS a re-access instruction message carrying radio configuration information and random access resource information which are received from the MBS after the SBS has transmitted to the MBS a RLF indication message indicative of the RLF occurring at the mobile terminal for the MBS; and
re-accessing the MBS in accordance with the radio configuration information and the random access resource information.

41. The mobile terminal communication control method according to claim 40, further comprising:
when the mobile terminal has re-accessed the MBS successfully, transmitting to the SBS a first re-access success message indicating that the mobile has re-accessed the MBS successfully; and
when the mobile terminal fails to re-access the MBS, transmitting to the SBS a first re-access failure message indicating that the mobile terminal fails to re-access the MBS.

42. The mobile terminal communication control method according to claim 41, wherein subsequent to the step of transmitting to the SBS the first re-access failure message, the mobile terminal communication control method further comprises:
receiving from the SBS a switch command message for instructing the mobile terminal to switch its communication from the MBS to the SBS; and
switching the communication of the mobile terminal from the MBS to the SBS.

43. The mobile terminal communication control method according to claim 42, wherein the step of switching the communication of the mobile terminal from the MBS to the SBS comprises:
deleting control plane information configured at the MBS;
switching data communication from the MBS to the SBS; and
configuring control plane information at the SBS.

44. A mobile terminal communication control device for use in a slave base station (SBS), comprising:
a first reception unit configured to receive from a mobile terminal a Radio Link Failure (RLF) message indicative of a RLF occurring at the mobile terminal for a master base station (MBS);
a first transmission unit configured to transmit to the MBS a RLF indication message indicative of the RLF occurring at the mobile terminal for the MBS;
a second reception unit configured to receive from the MBS radio configuration information and random access resource information for the mobile terminal returned after the MBS has received the RLF indication message; and
a second transmission unit configured to transmit to the mobile terminal a re-access instruction message carrying the radio configuration information and the random access resource information, the re-access instruction message being used to instruct the mobile terminal to re-access the MBS in accordance with the radio configuration information and the random access resource information.

45. A mobile terminal communication control device for use in a master base station (MBS), comprising:
a reception unit configured to receive from a slave base station (SBS) a Radio Link Failure (RLF) indication message indicative of a RLF occurring at a mobile terminal for the MBS;
a configuration unit configured to re-configure a radio protocol layer for the mobile terminal; and
a first transmission unit configured to transmit to the SBS radio configuration information and random access resource information for the mobile terminal, so that the mobile terminal re-accesses the MBS.

46. A mobile terminal accessing a master base station (MBS) and a slave base station (SBS) simultaneously, comprising:
a transmission unit configured to, when a Radio Link Failure (RLF) occurs at the mobile terminal for the MBS, transmit to the SBS a RLF message indicative of the RLF occurring at the mobile terminal for the MBS;
a reception unit configured to receive from the SBS a re-access instruction message carrying radio configuration information and random access resource information which are received from the MBS after the SBS has transmitted to the MBS a RLF indication message indicative of the RLF occurring at the mobile terminal for the MBS; and
an access unit configured to re-access the MBS in accordance with the radio configuration information and the random access resource information.

47. A mobile terminal communication control method, comprising:
Step S11 of receiving, by a master base station (MBS), from a mobile terminal a Radio Link Failure (RLF) message indicative of a RLF occurring at the mobile terminal for a slave base station (SBS);
Step S12 of determining, by the MBS, whether or not to instruct the mobile terminal to re-access the SBS, if yes, proceeding to Step S13, and otherwise, proceeding to Step S16;
Step S13 of transmitting to the SBS a RLF indication message indicative of the RLF occurring at the mobile terminal for the SBS;
Step S14 of receiving radio configuration information and random access resource information for the mobile terminal returned after the SBS has received the RLF indication message;
Step S15: transmitting to the mobile terminal a re-access instruction message carrying the radio configuration information and the random access resource information, the re-access instruction message being used to instruct the mobile terminal to re-access the SBS in accordance with the radio configuration information and the random access resource information; and
Step S16 of transmitting to the mobile terminal a first deactivation instruction message for instructing the mobile terminal to be deactivated for the SBS.

48. A mobile terminal communication control method, comprising:
Step S21 of receiving, by a slave base station (SBS), from a mobile terminal a Radio Link Failure (RLF) message indicative of a RLF occurring at the mobile terminal for a master base station (MBS);
Step S22 of determining, by the SBS, whether or not to instruct the mobile terminal to re-access the MBS, if yes, proceeding to Step S23, and otherwise, proceeding to Step S26;
Step S23 of transmitting to the MBS a RLF indication message indicative of the RLF occurring at the mobile terminal for the MBS;
Step S24 of receiving radio configuration information and random access resource information for the mobile terminal returned after the MBS has received the RLF indication message;
Step S25 of transmitting to the mobile terminal a re-access instruction message carrying the radio configuration information and the random access resource information, the re-access instruction message being used to instruct the mobile terminal to re-access the MBS in accordance with the radio configuration information and the random access resource information;
Step S26 of transmitting to the MBS the RLF indication message indicative of the RLF occurring at the mobile terminal for the MBS;
Step S27 of determining, through information interaction between the SBS and the MBS, that communication of the mobile terminal is to be switched from the MBS to the SBS; and
Step S28 of transmitting to the mobile terminal a switch command message for instructing the mobile terminal to switch its communication from the MBS to the SBS.
